# EUROPÄISCHE PATENTSCHRIFT

(11) **EP 1 202 167 B1**
(45) Veröffentlichungstag und Bekanntmachung des Hinweises auf die Patenterteilung: **30.07.2003**
(21) Anmeldenummer: 00123321.2
(22) Anmeldetag: 27.10.2000
(51) Int. Cl.: G06F 9/44

(54) **Verfahren zur modellbasierten objektorientierten Entwicklung von externen Schnittstellen für verteilte Softwaresysteme**
Method for model based object oriented development of external interfaces for distributed software systems
Méthode pour le développement orienté objet et basé sur un modèle d'interfaces externes pour des systèmes de logiciel distribués

(43) Veröffentlichungstag der Anmeldung: 02.05.2002
(73) Patentinhaber: Interactive Objects Software GmbH, 79100 Freiburg (DE)
(72) Erfinder: Heiderich, Jens, Dipl.-Ing. (FH), 77723 Gengenbach (DE); Hubert, Richard, Dipl.-Ing. MS CH. E., 79100 Freiburg (DE)

(56) Entgegenhaltungen:
- NUNES N J ET AL: "Towards a UML profile for interaction design: the wisdom approach" PROCEEDINGS OF UML 2000. 3RD INTERNATIONAL CONFERENCE ON THE UNIFIED MODELING LANGUAGE, YORK, UK (LECTURE NOTES IN COMPUTER SCIENCE VOL.1939), 2. - 6. Oktober 2000, Seiten 101-116, XP001036654 Berlin, Germany, Springer-Verlag, Germany ISBN: 3-540-41133-X
- KOVACEVIC S: "UML and user interface modeling" FIRST INTERNATIONAL WORKSHOP SELECTED PAPERS, UNIFIED MODELING LANGUAGE. UML'98: BEYOND THE NOTATION. FIRST INTERNATIONAL WORKSHOP, MULHOUSE, FRANCE, 3. - 4. Juni 1998, Seiten 253-266, XP001036652 Berlin, Germany, Springer-Verlag, Germany ISBN: 3-540-66252-9
- SNOECK M ET AL: "Modeling the dialogue aspects of an information system" PROCEEDINGS OF ECIS 2000: 8TH EUROPEAN CONFERENCE ON INFORMATION SYSTEMS, VIENNA, AUSTRIA, 3. - 5. Juli 2000, Seiten 159-165 vol.1, XP001039576 Vienna, Austria, Vienna Univ. Econ. & Bus. Adm, Austria
- BAUMEISTER H ET AL: "Towards a UML extension for hypermedia design" PROCEEDINGS OF 2ND INTERNATIONAL CONFERENCE ON THE UNIFIED MODELING LANGUAGE 1999, FORT COLLINS, CO, US (LECTURE NOTES IN COMPUTER SCIENCE VOL.1723), 28. - 30. Oktober 1999, Seiten 614-629, XP001036653 Berlin, Germany, Springer-Verlag, Germany ISBN: 3-540-66712-1

## Beschreibung

Die Beschreibung bezieht sich auf ein Verfahren zur modellbasierten objektorientierten Entwicklung von externen Schnittstellen für verteilte Softwaresysteme. Durch Anwendung eines solchen Verfahrens erfolgt Softwareentwicklung in einer systematischen, nachvollziehbaren und planbaren Art und Weise, geeignet für industrielle Softwareprojekte.

### Softwareentwicklungsprozesse und Metamodelle:

Zur Entwicklung von Softwaresystemen gibt es heute bereits eine Reihe von Softwareentwicklungsprozessen sowie wiederverwendbare Metamodelle. Ein solcher Entwicklungsprozeß ist z.B. der Rational Unified Process (RUP) der Firma Rational Software für die Erstellung eines Modells auf der Basis von CORBA-Components. Wiederverwendbare Metamodelle beschreiben unterschiedliche Softwaresysteme in einer zunehmend vereinheitlichten Art und ermöglichen somit die Übertragung von Modellbestandteilen zwischen verschiedenen Modellen, denen das gleiche Metamodell zugrunde liegt.

### Funktionaler Kern und externe Schnittstellen:

Im Mittelpunkt der meisten Softwaresysteme steht ein funktionaler Kern. In modernen Systemen ist dies oft die komponentenbasierte Implementierung eines Fachmodells, das die fachlichen Abstraktionen, die innerhalb einer Domäne relevant sind, wie z.B. Organisationseinheiten, Ressourcen und Geschäftsprozesse, und die zugehörigen fachliche Regeln, Beschränkungen und Interaktionen abbildet. Innerhalb dieses funktionalen Kerns kommunizieren Komponenten untereinander über ihre jeweiligen Schnittstellen.

Um ihre verschiedenen Aufgaben wahrnehmen zu können, müssen Softwaresysteme meist mit menschlichen Benutzern interagieren. Sie stellen hierfür Benutzerschnittstellen, also "Schnittstellen zur Nutzung durch Benutzer", bereit. Ferner sollen Softwaresysteme oft mit anderen Systemen integriert werden, um im Verbund mit diesen Systemen weitere Aufgaben erfüllen zu können. Diese Interaktionen zwischen Systemen wird durch die Bereitstellung von Systemschnittstellen, also "Schnittstellen zur Nutzung durch technische Systeme", ermöglicht. Benutzerschnittstellen und Systemschnittstellen sind externe Schnittstellen von Softwaresystemen.

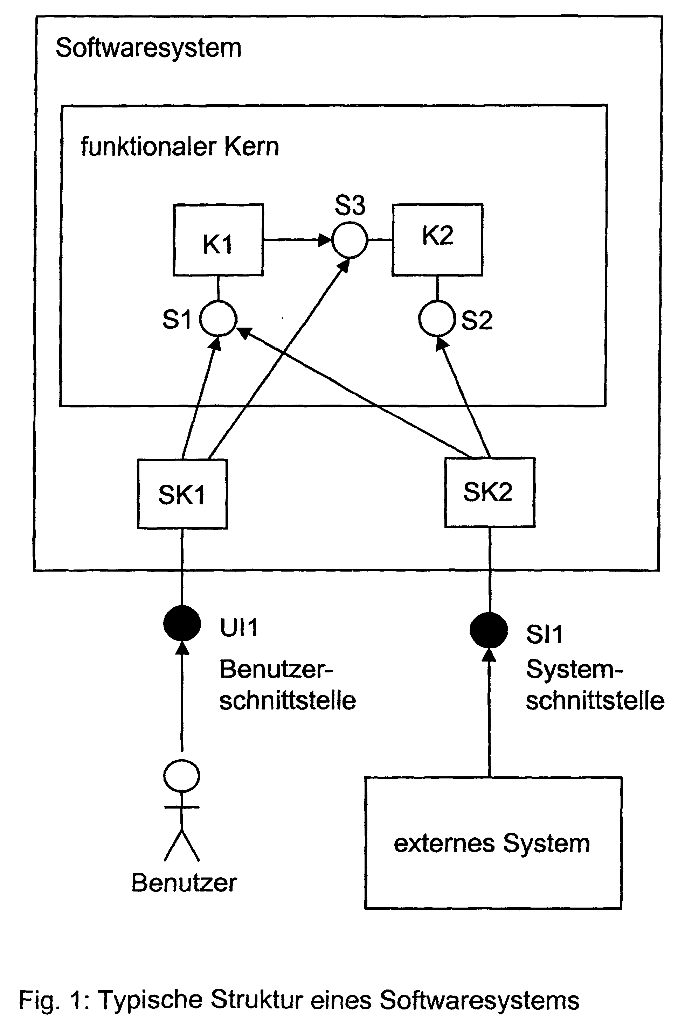

Diese allgemeine Struktur von Softwaresystemen ist in Fig. 1 mit folgenden Elementen dargestellt:
■ K1, K2 sind Komponenten (oder Module, je nach Systemarchitektur) des funktionalen Kerns.
■ K1 stellt die interne Schnittstelle S1, K2 die internen Schnittstellen S2 und S3 bereit.
■ SK1, SK2 sind Schnittstellenkomponenten und nutzen interne Schnittstellen.
■ SK1 stellt die Benutzerschnittstelle UI1 bereit, SK2 die Systemschnittstelle SI1.
■ UI1 und SI1 sind externe Schnittstellen des Softwaresystems.
■ Pfeile kennzeichnen Nutzungsbeziehungen.

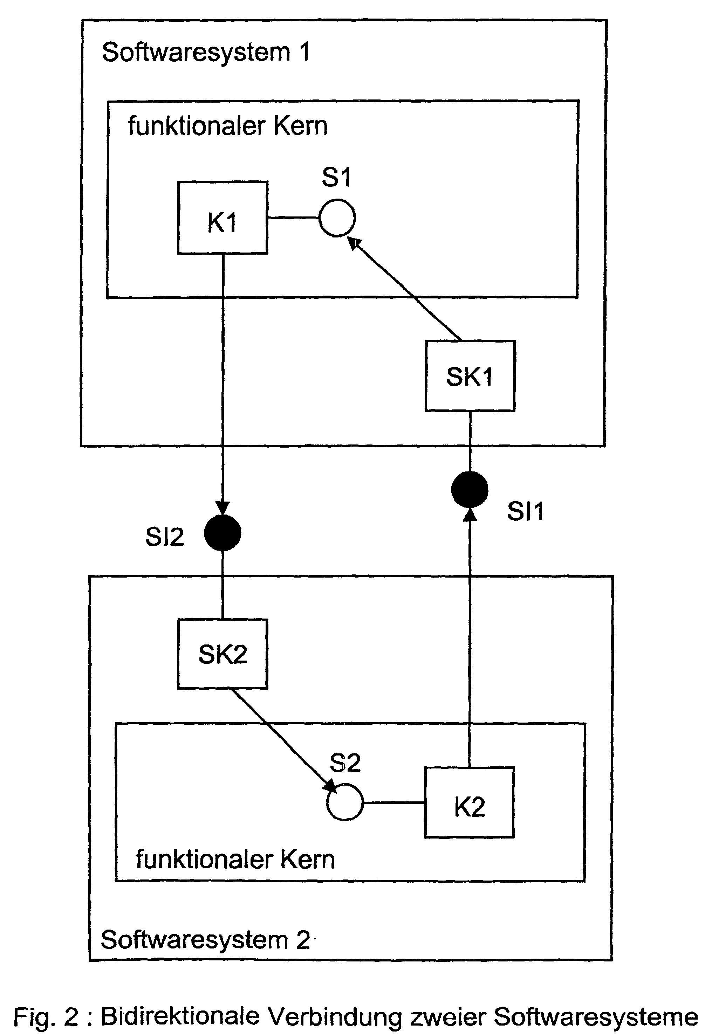

Die gegenseitige Kopplung zweier Softwaresysteme als Sonderfall der Nutzung von Systemschnittstellen ist in Fig. 2 dargestellt. Elemente in dieser Darstellung:
■ K1, K2 sind Komponenten (oder Module) des jeweiligen funktionalen Kerns der beiden Systeme.
■ K1 stellt die interne Schnittstelle S1, K2 die internen Schnittstelle S2 im jeweiligen System bereit.
■ SK1, SK2 sind Schnittstellenkomponenten.
■ SK1 stellt die Systemschnittstelle SI1 des Systems 1 bereit, SK2 die Systemschnittstelle SI2 des Systems 2.
■ Pfeile kennzeichnen Nutzungsbeziehungen.
Eine Erweiterung der in Fig. 1 dargestellten Struktur eines Softwaresystems ist die Bereitstellung externer Schnittstellen als Kapselung für vorhandene externe Schnittstellen. Es werden hierbei neue externe Schnittstellen geschaffen, die auf vorhandene externe Schnittstellen zugreifen. Diese Art von Kapselschnittstellen (engl.: "Wrapper") wird häufig bei der Integration von über das Internet verteilten Systemen eingesetzt. Ein konkretes Beispiel ist der Zugriff auf Internetsuchmaschinen über Metasuchmaschinen. Die Metasuchmaschinen kapseln externe Schnittstellen von Internetsuchmaschinen und bieten die gleiche Suchfunktionalität in einer eigenen externen Schnittstelle an.

Es gibt verschiedene Konzepte, die im Zusammenhang mit der Entwicklung von Softwaresystemen und ihren externen Schnittstellen zum Einsatz kommen. Dazu zählen die Abstraktionen und Methoden der objektorientierten Softwareentwicklung und Modellierung auf der Basis von UML (Unified Modeling Language), beschrieben z.B. in James Rumbaugh, Ivar Jacobson, Grady Booch, "The Unified Modeling Language Reference Manual", Addison Wesley 1998, ISBN 0-201-30998-X. Externe Schnittstellen kommen insbesondere bei verteilten Softwaresystemen zum Einsatz. Solche Systeme können auf unterschiedlichen Systemarchitekturen basieren, die wiederum häufig auf moderne Komponentenstandards und ihre jeweiligen Metamodelle zurückgreifen. Beispiele für Komponentenstandards sind CORBA-Components der OMG (Object Management Group) oder der EJB-Standard (Enterprise JavaBeans) der Firma SUN Microsystems. Verschiedene Verfahren zur Modellierung von Benutzerschnittstellen bauen auf ihrem jeweiligen Verständnis des MVC-Paradigmas (Model-View-Controller) auf, das beschrieben ist in Steve Burbeck, "Applications Programming in Smalltalk-80: How to use Model-View-Controller (MVC)", ParcPlace Systems 1987/1992, Referenzdokument. Die meisten Verfahren beschränken sich auf die Betrachtung und oft sehr vereinfachte Abstraktion einzelner Schnittstellentechnologien. Ein Beispiel ist das Web Application Design der Firma Rational Software mit ihrer Beschränkung auf die Struktur von Websites und einfachen Web-Anwendungen. Einige der Verfahren sehen Varianten von Zustandsautomatenbeschreibungen ausschließlich zur Beschreibung von Teilaspekten von Benutzerschnittstellen vor, z.B. die "Server-Side MVC Architecture", Part 1-3, uidesign.net oder lan Horrocks, "Constructing the User Interface with Statecharts", Addison Wesley 1999, ISBN 0-201-34278-2.
Zu den bekanntesten existierenden Beschreibungen von Prozessen zur Entwicklung objektorientierter Softwaresysteme zählen der OPEN Process, beschrieben in Brian Henderson-Sellers, Houman Younessi, lan S. Graham,"The OPEN Process Specification", Addison Wesley 1998, ISBN 0-201-33133-0, und der Rational Unified Process (RUP), beschrieben in Philippe Kruchten, "The Rational Unified Process, An Introduction" 2.ed., Addison Wesley 2000, ISBN 0-201-70710-1. Darüber hinaus sind unterschiedliche Strategien zur Wiederverwendung von Softwarebausteinen im Rahmen objektorientierter Softwaresysteme dokumentiert. Das RASC-Konzept (Reduced Abstraction Set Computing) ist Teil der Softwarearchitektur Convergent Architecture der Firma Interactive Objects Software, beschrieben in Richard Hubert, "Convergent Architecture und Convergent Components", Interactive Objects Software1999, Abschnitt 3.2., Rerferenzdokument. Das RASC-Konzept beschreibt die Modellierung von Softwaresystemen auf der Basis langfristig stabiler und ausdrucksstarker Schlüsselabstraktionen, die ein hohes Maß von Wiederverwendbarkeit bereits auf Modellierungsebene gewährleisten.

### Nachteile bekannter Verfahren:

Bei der Entwicklung von externen Schnittstellen für Softwaresysteme mit den bekannten Entwicklungsverfahren ergeben sich die folgenden vier Grundprobleme, die in beliebiger Kombination auftreten können:

### Problemfeld 1 - Fehlende Model-View Trennung:

In Systemen, bei deren Entwicklung die Model-View Trennung nicht konsequent eingehalten wurde, sind Kernfunktionalität und externe Schnittstelle(n) eng miteinander verwoben. Änderungen der externen Schnittstellen bedingen Eingriffe am funktionalen Kern mit dem Risiko, daß dabei Fehler eingeführt werden. Es gibt im allgemeinen zahlreiche gegenseitige Abhängigkeiten zwischen Fachlogik und Darstellungslogik, was nicht nur die Wartung und Weiterentwicklung eines Systems erschwert, sondern außerdem bedeutet, daß externe Schnittstellen nicht unabhängig vom funktionalen Kern weiterentwickelt werden können. Aber gerade die Möglichkeit, neue Schnittstellen ohne Änderung der Kernfunktionalität hinzufügen zu können, ist extrem wichtig,
1. um neu aufkommende Schnittstellentechnologien schnell nutzen zu können
   ■ Beispiel Benutzerschnittstellen: Nutzung neuer Client-Technologien, z.B. Web Applications, WAP (Wireless Application Protocol)-Protokoll mit WML (Wireless Markup Language)-basierten Inhalten oder J2ME (Java 2 Platform, Micro Edition)-basierte Systeme.
   ■ Beispiel Systemschnittstellen: CORBA-Schnittstellen, JMS (Java Message Service)-basierte Kommunikationsschnittstellen, XML (Extensible Markup Language)-basierte Standards zur Geschäftssystemintegration, auch bekannt als Enterprise Application Integration (EAI), oder einfache Java-APIs (Application Program Interfaces).
2. um der Anforderung nach immer rascherer und umfangreicherer Integration von Systemen gerecht zu werden. In einigen Branchen besteht buchstäblich täglich der Bedarf, eigene Systeme mit den Systemen neuer Geschäftspartner zu verbinden, ohne daß dabei die Qualität und Stabilität dieser Systeme beeinträchtigt werden darf.

Dieses Problemfeld wurde schon vor vielen Jahren durch das MVC-Paradigma und eine zunehmende Zahl mehrschichtiger Systemarchitekturen adressiert und mehr oder weniger gelöst. Zu den typischen Schwachstellen bekannter Verfahren, die diese Ansätze verfolgen, gehört z.B. die fehlende Beschreibung der Abhängigkeiten von Schnittstellenelementen zum funktionalen Kern des Softwaresystems auf Modellebene. Dies hat zur Folge, daß bei Änderungen des funktionalen Kerns auf Modellebene nicht nachvollzogen werden kann, welche externen Schnittstellen von der Änderung betroffen sind. Aufwandsschätzungen für Änderungen werden dadurch sehr erschwert und ihre Durchführung deutlich fehleranfälliger, da die anzupassenden Stellen oft auf Quelltextebene identifiziert werden müssen.

### Problemfeld 2 - Fehlendes Schnittstellenmodell:

Für viele Softwaresysteme ist nur die Kemfunktionalität modelliert. Die externen Schnittstellen werden im Modell nicht erfaßt, so daß das Softwaresystem folglich nicht vollständig beschrieben ist. Erweiterungen und Anpassungen der externen Schnittstellen werden dadurch deutlich erschwert und eine Wiederverwendung auf Modellebene ist praktisch ausgeschlossen. Fehlende Wiederverwendung führt zu unnötig redundanter Implementierung von Funktionalität, z.B. bei der Umsetzung gleichwertiger externer Schnittstellen für verschiedene Zieltechnologien. Redundante Funktionalität schließlich erhöht die Fehleranfälligkeit, weil das Gesamtsystem einfach mehr Quelltext umfaßt, der wiederum fehlerhaft sein kann. Die Beseitigung von logischen Fehlern wird ebenfalls erschwert, da zum einen keine Modellbeschreibung für das Sollverhalten vorliegt und zum anderen der logische Fehler möglicherweise an mehreren Stellen redundant implementiert ist.

Es gibt zwei kritische Varianten innerhalb dieses Problemfeldes:
■ Schnittstellenmodelle, die unvollständig sind, häufig weil sie auf unvollständigen Metamodellen beruhen.
■ Schnittstellenmodelle, die auf inhomogenen Metamodellen beruhen.

Unvollständige Schnittstellenmodelle lassen einen oder mehrere Aspekte außer acht, die bei objektorientierter Softwareentwicklung zu einer vollständigen Schnittstellenbeschreibung gehören. Solche elementaren Aspekte sind:
■ das Klassenmodell der Schnittstellenbestandteile, hierbei insbesondere Nutzungsbeziehungen der Klassen untereinander und Abhängigkeiten zu Klassen des funktionalen Kerns des Softwaresystems.
■ die Verhaltensbeschreibung aller Schnittstellenelemente, einschließlich der Interaktionen mit dem funktionalen Kern des Softwaresystems.
■ die Definition von Sicherheitsanforderungen und -beschränkungen,
■ die Definition von Transaktionsgrenzen, bzw. die Definition transaktionaler Arbeitseinheiten (engl. "Units of Work").
■ eine Differenzierende Fehlerbehandlung.

Modelle auf der Basis inhomogener Metamodelle beschreiben Aspekte von Benutzerschnittstellen in einer Art und Weise, die nicht oder schwer mit Beschreibungen anderer Teile eines Softwaresystems vereinbar ist. Dies trifft z.B. zu, wenn zur Beschreibung des Verhaltens einer Schnittstellenkomponente ein anderes Metamodell verwendet wird als zur Beschreibung des Verhaltens von Kemkomponenten. In einem solchen Fall kann es durch semantische Differenzen der unterschiedlichen Beschreibungsarten zu logischen Brüchen in den resultierenden Gesamtmodellen kommen, die an verschiedenen Stellen des Softwareentwicklungsprozesses nur mit erheblichem Aufwand sauber gehandhabt werden können. Um dieses Problem zu minimieren, sollte ein Verfahren zur Erstellung externer Schnittstellen anerkannte Standards der Softwareentwicklung so weit wie möglich berücksichtigen.

### Problemfeld 3 - Benutzerschnittstellen und Systemschnittstellen werden unterschiedlich behandelt:

Benutzerschnittstellen und Systemschnittstellen werden häufig unabhängig voneinander betrachtet, obwohl sie zahlreiche Gemeinsamkeiten besitzen, die in entsprechenden Abstraktionen zusammengefaßt werden könnten.
Nachteile der getrennten Betrachtung sind:
1. Bestimmte gemeinsame Eigenschaften werden für Benutzerschnittstellen und Systemschnittstellen quasi mit doppeltem Aufwand in allen Phasen der Entwicklung separat behandelt, z.B. Autorisierungsmechanismen.
2. Die Umwandlung einer Benutzerschnittstelle in eine Systemschnittstelle und umgekehrt wird mangels gemeinsamer Basisabstraktionen deutlich erschwert. Mit zunehmendem Automatisierungswunsch in der Industrie wird aber gerade eine solche Überführung von Benutzerschnittstellen in Systemschnittstellen immer wichtiger.
   Beispiel: Bestellannahme eines Großhändlers. Ein Großhändler hat bisher nur eine telefonische Bestellannahme (bzw. auch Brief und Fax), in der Mitarbeiter die Bestellungen der Kunden entgegennehmen und über eine Benutzerschnittstelle in ein geeignetes Bestellsoftwaresystem eingeben. Nun will der Großhändler den Kunden eine elektronische Bestellung ermöglichen, so daß z.B. die Lagerverwaltungssoftware eines Einzelhändlers automatisch beim Großhändler nachbestellen kann, wenn bestimmte Artikel zur Neige gehen. Hierfür muß der Großhändler nun eine neue Systemschnittstelle entwickeln, deren Funktionalität sich unmittelbar aus der bestehenden Benutzerschnittstelle ableiten ließe.

Probtemfeld 4 - Redundante Erstellung wiederkehrender Schnittstellenstrukturen, wobei gleichartige Schnittstellen immer wieder neu manuell entwickelt werden. Im besten Fall geschieht dies auf Grundlage allgemein formulierter, durch eine Softwarearchitektur vorgegebener Richtlinien, meist jedoch nach eigenen Vorstellungen der jeweiligen Entwickler.

Die Nachteile liegen auf der Hand:
1. Die redundante Ausführung von Entwicklungstätigkeiten führt zu höherem Zeitund Kostenaufwand, der durch Designwiederverwendung vermieden würde. Redundante Lösungen müssen außerdem separat gewartet werden, was wiederum zu erhöhtem Aufwand führt und zudem die Fehlerwahrscheinlichkeit steigert. Damit sinkt die Softwarequalität.
2. Läßt man mehrere Entwickler z.B. eine Schnittstelle zum "Bearbeiten der Daten eines Fachobjekts vom Typ X" entwickeln, so weichen i.d.R. die einzelnen Lösungen in ihrer Funktionalität voneinander ab. Funktionalität umfaßt hier nicht nur den durch die Lösung angebotenen Funktionsumfang, also die Menge aller möglichen Funktionen, sondern auch das Bedienkonzept, also die Art, wie diese Funktionen dem Benutzer angeboten werden. In der Folge wird die resultierende Anwendung sich für konzeptionell gleiche Aufgaben unterschiedlich verhalten. Der Benutzer muß die verschiedenen Bedienkonzepte erlernen, was einen erhöhten Schulungsaufwand bedeutet und eine Minderung der Nutzbarkeit darstellt.

### Hintergrund zu Problemfeld 4:

Moderne Softwaresysteme werden zunehmend auf der Basis von Fachmodellen erstellt. Ein Fachmodell beschreibt die fachlichen Abstraktionen, die innerhalb einer Domäne relevant sind, wie z.B. Organisationseinheiten, Ressourcen und Geschäftsprozesse, und die zugehörigen fachliche Regeln, Beschränkungen und Interaktionen. Die aus dem Fachmodell resultierenden Implementierungen - in modernen Systemarchitekturen im allgemeinen Implementierungen als Fachkomponenten - bilden den übergreifenden funktionalen Kern für eine beliebige Zahl von Anwendungen, z.B. Benutzerschnittstellenanwendungen, die jeweils in einer für ihren Anwendungszweck (engl. "Use Case") typischen Art auf das Fachmodell zugreifen.

In den externen Schnittstellen solcher Systeme treten unabhängig vom konkreten Fachmodell immer wieder bestimmte Strukturen und Arten von Zugriffen auf Fachobjekte auf. Ein Beispiel sind die sogenannten Browser-Anwendungen, die die Navigation über Fachobjekte erlauben. Dabei werden z.B. in einer grafischen Benutzeroberfläche die Daten eines einzelnen Fachobjektes und Referenzen auf alle von diesem Objekt aus sichtbaren anderen Fachobjekte angezeigt. Der Benutzer kann die Daten des Fachobjektes verwenden und direkt ändern. Er kann außerdem durch Auswahl einer der Referenzen zum referenzierten Objekt navigieren, d.h. die Daten des referenzierten Objekts nebst dessen Referenzen auf wieder andere Objekte anzeigen lassen usw. Zu dieser Grundfunktionalität von Browser-Anwendungen kommen oft Such-/Filtermöglichkeiten auf Objektmengen und Möglichkeiten zum Datenexport in unterschiedliche Repräsentationsformate.

Wiederkehrende Strukturen in Anwendungen werden in bekannten Verfahren auf zwei Arten behandelt:
1. In spezialisierten Klassenbibliotheken oder Frameworks zur Entwicklung von Benutzerschnittstellen sind Basisklassen zu finden, die dem Entwickler eine Unterstützung bei der Implementierung wiederkehrender Benutzerinteraktivitäten geben, z.B. eine Basisklasse "GuiEditController", die wiederkehrende Aufgaben wie "Speichern", "Rückgängig" oder "Objekt löschen" bei der Bearbeitung der Daten einer einzelnen Fachobjektinstanz implementiert.
   Nachteil: Es wird kein Schnittstellenmodell für die resultierenden Anwendungen erzeugt (s. Problemfeld 2).
2. In einigen Softwarewerkzeugen können Standardanwendungen nach einem fest vorgegebenen Schema erzeugt werden. Diese Vorgehensweise ist aus dem Bereich der Werkzeuge zur Handhabung relationaler Datenbanken bekannt. Einige Werkzeuge, wie z.B. Microsoft Access, sind in der Lage, ausgehend von Datenbankschemata, die hier sozusagen das Fachmodell bilden, Masken zur Datenanzeige und -eingabe zu erzeugen. Die Erzeugung dieser Benutzerschnittstellen kann in manchen Werkzeugen auch parametrisiert werden. Diese Werkzeuge sind dadurch charakterisiert, daß sie
   a) ausgehend vom Fachmodell unmittelbar Benutzerschnittstellenimplementierungen erzeugen und
   b) dafür feste Abbildungsvorschriften verwenden, die im Einzelfall auch parametrisierbar sein können.

   Nachteil 1: Der Entwickler bzw. Softwarearchitekt kann keine eigenen Abbildungsvorschriften definieren.
   Nachteil 2: Es wird kein Schnittstellenmodell für die resultierenden Anwendungen erzeugt (s. Problemfeld 2).

Ein Softwareentwicklungsverfahren ist Teil der Convergent Architecture (CA) der Firma Interactive Objects Software, beschrieben z.B. in Richard Hubert, "Convergent Architecture und Convergent Components", Interactive Objects Software 1999, Referenzdokument. Die CA ist eine ganzheitliche Softwarearchitektur, die alle Aspekte objektorientierter Softwaresysteme beschreibt, insbesondere ihre modellgetriebene Entwicklung auf der Grundlage anerkannter Standards und mit Hilfe langlebiger und ausdrucksstarker Schlüsselabstraktionen. Die hierfür verwendeten Modelle - ihrerseits beschrieben in Metamodellen - ermöglichen die Beschreibung der statischen und dynamischen Aspekte eines zu entwickelnden Softwaresystems in einem Gesamtmodell. Mit Hilfe eines solchen Gesamtmodells können auch sehr umfangreiche Systeme hoher Komplexität in allen Phasen des Entwicklungsprozesses für Neuentwicklung, Wartung und evolutionäre Weiterentwicklung sicher gehandhabt werden.

Der Erfindung liegt die Aufgabe zugrunde, ein Verfahren anzugeben, das auch für die Entwicklung externer Schnittstellen von Softwaresystemen ein schlüssiges Modellierungs- und Entwicklungsverfahren bietet und zur Vollständigkeit der Modelle beiträgt.

Diese Aufgabe wird durch ein Verfahren zur modellbasierten objektorientierten Entwicklung von externen Schnittstellen für verteilte Softwaresysteme gelöst, das die im Anspruch 1 angegebenen Merkmale aufweist. Vorteilhafte Ausgestaltungen sind in weiteren Ansprüchen angegeben.

Das hier beschriebene Verfahren zur modellbasierten Entwicklung von externen Schnittstellen für Softwaresysteme adressiert und löst die zuvor in den vier Problemfeldern beschriebenen Punkte und bietet gegenüber bekannten Verfahren eine deutliche Vereinfachung beim Entwurf und bei der Implementierung externer Schnittstellen für Softwaresysteme.

Das hier vorgestellte Verfahren ermöglicht die modellgetriebene Entwicklung externer Schnittstellen als eigenständige Komponenten von Softwaresystemen. Statische Eigenschaften und dynamisches Verhalten von Schnittstellen werden in einem klar definierten Entwicklungsprozeß unter Nutzung eines Accessormetamodells modelliert. Dieses Accessormetamodell ist eine Erweiterung des UML-Metamodells. Die zentrale Abstraktion ist ein Accessor, der im Modell eine elementare externe Schnittstelle repräsentiert. Die zweite bedeutende Abstraktion ist ein Representer, der im Modell ein elementares Schnittstellenelement mit Eingabe-/Ausgabeeigenschaften repräsentiert und von den Accessoren genutzt werden kann.

Der Fokus des Verfahrens liegt auf nichttrivialen externen Schnittstellen, die einen Kommunikationszustand innerhalb eines Kommunikationsprotokolls zwischen Schnittstelle und Schnittstellenbenutzer (Client) haben können. Schnittstellen dieser Art werden typischerweise in verteilten Softwaresystemen benötigt, in denen menschliche Benutzer oder externe Systeme als Clients auf die externen Schnittstellen eines Softwaresystems zugreifen. Das Softwaresystem agiert dabei in der Rolle des Servers.

Die bei der Entwicklung einer externen Schnittstelle nach diesem Verfahren erstellten Schnittstellenmodelle sind leicht zu lesen, d.h. ein typischer UML-Benutzer wird in der Lage sein, die Modelle intuitiv zu verstehen. Die Schnittstellenmodelle dienen somit während der Entwicklung als Kommunikationsgrundlage bei Diskussionen über den Schnittstellenentwurf.

Das Accessormetamodell, das Bestandteil dieses Verfahrens ist, ermöglicht Schnittstellenmodellierern und Schnittstellenentwicklem die konsequente Nutzung aller Vorteile der objektorientierten Modellierung und Implementierung, insbesondere aller Abstraktionsmechanismen. In einem Schnittstellenmodell sind Accessoren und Representer Klassen. Alle Eigenschaften, die einer Klasse in UML zugeordnet werden können, sind auch in der Modellierung von Accessoren und Representern nutzbar. Besonders wichtig sind in diesem Zusammenhang die Typabstraktion und die Funktionsabstraktion. Durch Typabstraktion, also Vererbung, kann gemeinsames Verhalten unterschiedlicher Schnittstellenelemente in einer gemeinsamen Basisklasse zusammengefaßt werden. Durch Funktionsabstraktion (Polymorphie) kann das Verhalten einer Funktion, die in einer Basisklasse definiert wurde, in einer abgeleiteten Klasse verändert werden.

Das Verfahren ermöglicht die Definition von Accessorlaufzeitumgebungen in einem eigenen Entwicklungsprozeß. Das Verfahren definiert Schlüsselabstraktionen und abstrakte Protokolle, die Voraussetzung für den Betrieb von Accessors in einer Laufzeitumgebung sind. Die Schlüsselabstraktionen und Basisprotokolle werden zusammenfassend als Accessorlaufzeitabstraktionen bezeichnet. Eine konkrete Accessorlaufzeitumgebung muß Implementierungen für die Accessorlaufzeitabstraktionen anbieten.

Das Verfahren sieht die Entwicklung von Implementierungscartridges vor. Diese Cartridges sind austauschbare Templatesätze mit programmierten Bestandteilen für einen Codegenerator (z.B. ArcStyler C-GEN von der Firma Interactive Objects Software), die es ermöglichen, eine Menge von Abbildungsvorschriften auf ein Schnittstellenmodell anzuwenden und so durch translative Codegenerierung automatisch alle notwendigen Artefakte zu erzeugen, die für den Betrieb der im Schnittstellenmodell modellierten Accessoren in einer zuvor definierten Accessorlaufzeitumgebung notwendig sind. Dazu zählen Implementierungsbestandteile ebenso wie automatisch erzeugte Schnittstellendokumentationen und Implementierungen von Testclients zur Durchführung automatisierter Schnittstellentests. Das Konzept der translativen Codegenerierung im Gegensatz zu struktureller oder verhaltensorientierter Codegenerierung ist erläutert in der Druckschrift von Rodney Bell, "Code Generation from Object Models", erschienen im Journal "Embedded Systems Programming", Ausgabe Vol. 11, März 1998.

Das Verfahren berücksichtigt notwendige Übergänge in den Entwicklungsprozessen, die dadurch entstehen, daß verschiedene Entwickler in unterschiedlichen Rollen unterschiedliche Aufgaben in der Entwicklung einer externen Schnittstelle, einer Implementierungscartridge für externe Schnittstellen oder einer Modellierungscartridge zur automatisierten Erstellung von Schnittstellenmodellen wahrnehmen.

Das Verfahren nutzt die Tatsache, daß es zahlreiche Gemeinsamkeiten zwischen Benutzerschnittstellen und Systemschnittstellen gibt, wie zum Beispiel
■ die typische Aufteilung zwischen Kontrolleinheiten mit dynamischem Verhalten und Koordinationsaufgaben einerseits und für den Client nutzbaren Schnittstellenelementen mit Eingabe-/Ausgabeeigenschaften andererseits,
■ die Notwendigkeit, Möglichkeiten zur deklarativen Definition von Sicherheitsauflagen bereitzustellen, einschließlich
   - Verwaltung und Klassifikation von Schnittstellenbenutzern,
   - Definition von Sicherheitsstufen für Informationen, die über die Schnittstelle ausgegeben werden,
   - Autorisierung von Schnittstellenbenutzern zur Ausführung von Schnittstellenaktionen
   und die Notwendigkeit, diese Sicherheitsauflagen in nachvollziehbarer, überwachbarer und verifizierbarer Weise auf der Basis erprobter Sicherheitstechnologien softwaretechnisch umzusetzen,
■ die typischen Interaktionen von Schnittstellenelementen und Kontrolleinheiten der Schnittstelle mit dem funktionalen Kern des Softwaresystems.

Durch Einführung und Nutzung einer "Representer"-Abstraktion können Benutzerschnittstellen und Systemschnittstellen in exakt der gleichen Art und Weise modelliert werden. Dadurch können
■ Systemschnittstellen und Benutzerschnittstellen durch Abbildung auf unterschiedliche Accessorlaufzeitumgebungen aus dem gleichen Modell erzeugt werden,
■ Modellelemente eines Schnittstellenmodells für die unterschiedlichsten Schnittstellen wiederverwendet werden.

Durch geeignete Gestaltung unterschiedlicher Accessorlaufzeitumgebungen und der zugehörigen Implementierungscartridges zur Technologieabbildung auf diese Laufzeitumgebungen wird in vielen Fällen sogar die gemeinsame Nutzung des für die Accessoren generierten Codes möglich. Da dieser Code im Laufe des Schnittstellenentwicklungsprozesses u.U. maßgeblich manuell erweitert wird, bedeutet eine gemeinsame Nutzung von Accessorcode durch unterschiedliche Schnittstellenimplementierungen eine deutliche Aufwandsreduzierung bei der Entwicklung und späteren Wartung der Schnittstellen eines Softwaresystems und durch weniger Redundanz letztendlich auch eine Steigerung der Softwarequalität.

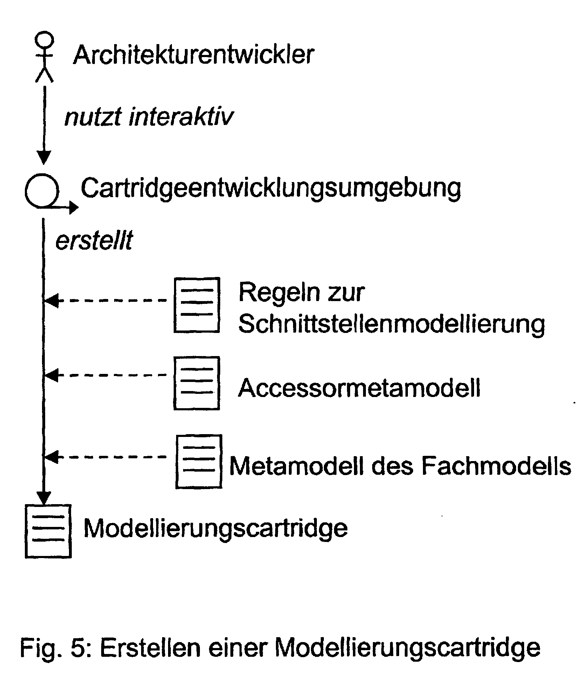

Das Verfahren enthält die Möglichkeit zur Definition und automatisierten Ausführung von Abbildungsvorschriften zur Erzeugung von Schnittstellenmodellen aus beliebigen anderen UML-Modellen mit Hilfe eines Modellgenerators, der die Abbildungsvorschriften einer Modellierungscartridge ausführt. Die Schnittstellenmodellgenerierung auf der Basis des Anwendungsmodells eines funktionalen Kerns (Kemmodell, z.B. Fachobjektmodell) bietet folgende Vorteile:
■ Bei geeigneter Definition der Abbildungsvorschriften in der Modellierungscartridge wird es möglich, externe Schnittstellen (z.B. Benutzerschnittstellen) zum Zugriff auf die gesamte Funktionalität der Elemente des Kernmodells vollautomatisch zu erstellen. Dabei wird aus dem Kernmodell durch den Modellgenerator ein vollständiges Schnittstellenmodell erzeugt, das dann im zweiten Schritt durch den Codegenerator und anschließende automatische Übersetzerläufe für eine gewählte Accessorlaufzeitumgebung ausführbar gemacht wird. Solche vollautomatisch erstellten Schnittstellen können zum Testen der Elemente des Kernmodells verwendet werden. Abhängig von der Art der gewünschten Schnittstellenanwendung und der Qualität des Kernmodells und der Abbildungsvorschriften können diese Schnittstellen in einigen Anwendungsfällen unmittelbar für den produktiven Einsatz geeignet sein. Beispiele hierfür sind Anwendungen zur freien Navigation über Elementinstanzen eines Kernmodells (Modell-Browser) oder einfache Anwendungen zur Datenpflege in datenzentrischen Softwaresystemen.
■ Das Verfahren beschleunigt die Schnittstellenentwicklung in Softwareprojekten, denen eine Softwarearchitektur zugrunde liegt, denn es definiert Methoden für die Implementierung der in der Architektur definierten Regeln zur Erstellung der Schnittstellen in Form von Modellierungscartridges, wie in Fig. 5 gezeigt, so daß der Modellgenerator die Abbildungsvorschriften automatisch anwenden kann. Dadurch wird der Schulungsaufwand für Schnittstellenmodellierer stark reduziert und gleichzeitig die Erstellung architekturkonformer Schnittstellen beschleunigt.
■ Stereotype Standardaufgaben bei der Erstellung eines Schnittstellenmodells, die bei wiederholter Ausführung durch einen Schnittstellenmodellierer leicht zu Fehlern führen, können mit Hilfe des Modellgenerators automatisch ausgeführt werden, so daß der Schnittstellenmodellierer sich auf den "kreativen" Teil der Schnittstellenmodellierung und die Umsetzung von Sonderfunktionalitäten konzentrieren kann. Er kann dabei vom Modellgenerator automatisch erstellte Modellelemente einbinden. Zu den zeitaufwendigen und fehleranfälligen Standardaufgaben gehört z.B. die Erstellung von Standardansichten zur Anzeige der Daten von Fachobjekten. Fachobjekte sind dabei Instanzen von Technologieabbildungen von Elementen des Fachmodells.

Eine modulare Softwareentwicklungsumgebung, die das hier vorgestellte Verfahren unterstützt, soll verschiedene Erweiterungspunkte anbieten, um folgende Arten wiederverwendbarer Werkzeugkomponenten separat austauschen zu können:
■ Eigene Accessorlaufzeitumgebungen mit Definition, Implementierung und Beschreibung samt Programmierrichtlinien und jeweils zugehöriger Implementierungscartridge zur Codegenerierung für diese Laufzeitumgebungen. Dabei werden Laufzeitumgebungen in den meisten Fällen auf marktverfügbaren Basistechnologien aufbauen. Wo nötig kann durch minimale Erweiterungen in einer sogenannten Adapterschicht die Basistechnologie um accessorspezifische Eigenschaften erweitert werden. Beispiele für Basistechnologien als Grundlage von Laufzeitumgebungen für Benutzerschnittstellen sind Java Servlets, Java Swing für Applikationen, X 11, Microsoft C++ MFC, Visual Basic. Beispiele für Basistechnologien als Grundlage von Laufzeitumgebungen für Systemschnittstellen sind Pure Java, CORBA-Implementierungen, MOM Anbindungen (Message Oriented Middleware), z.B. JMS-basiert oder IBM MQ-Series-basiert.
■ Modellierungscartridges für den Modellgenerator zur Ableitung unterschiedlichster Schnittstellenmodelle aus vorhandenen UML-Modellen.
■ Konkrete wiederverwendbare Schnittstellenmodelle, evtl. mit fertiger Implementierung zentraler Bestandteile des Schnittstellenmodells, zur Anbindung von Schnittstellen an bekannte (meist zugekaufte und integrierte) Dienste in Softwaresystemen. Solche Dienste sind z.B. Workflow Engines.

Das hohe Maß an sinnvoller Wiederverwendbarkeit bei gleichzeitig hoher Flexibilität durch zahlreiche wohldefinierte Erweiterungspunkte zeichnet das hier vorgestellte Verfahren aus.

Die folgenden zentralen Bestandteile des Verfahrens werden detailliert vorgestellt:
■ ein Accessormetamodell, das auch ein Accessorverhaltensmetamodell und ein Representermetamodell umfaßt,
■ eine konzeptionelle Abstraktion von Accessorlaufzeitumgebungen, die im folgenden als Accessorlaufzeitabstraktion bezeichnet wird,
■ ein Entwicklungsprozeß zur Entwicklung und Bereitstellung von externen Schnittstellen,
■ ein Entwicklungsprozeß zur Entwicklung und Bereitstellung neuer Accessorlaufzeitumgebungen.

Dabei dient ein fiktives "Warenbestellsystem" als Beispiel für ein Softwaresystem, für das externe Schnittstellen entwickelt werden sollen und zwar
- eine Benutzerschnittstelle zum Erstellen einer neuen Bestellung
- eine Systemschnittstelle zum Erstellen einer neuen Bestellung
Der funktionale Kern des Beispielsystems sei auf der Basis eines Fachmodells erstellt worden. Das vollständige Beispiel ist weiter unten beschrieben. Auszüge aus dem Beispiel werden in den folgenden Abschnitten zur Veranschaulichung verwendet.

### Accessormetamodell

Das Accessormetamodell beschreibt die Abstraktionen, mit deren Hilfe konkrete Schnittstellenmodelle erstellt werden können. Das Accessormetamodell ist eine Erweiterung des UML-Metamodells zur Modellierung objektorientierter Systeme. Konkrete, unter Verwendung des Accessormetamodells erstellte Schnittstellenmodelle werden im folgenden auch als Anwendungsmodelle bezeichnet werden. Das Accessormetamodell konkretisiert die Teile View und Controller aus dem MVC-Paradigma und definiert, an welchen Stellen Interaktionen mit dem Modell möglich sind. Existieren in einem Anwendungsmodell UML-konforme Beschreibungen für den MVC-Model-Teil des zu entwickelnden Systems, so können mit Hilfe des hier vorgestellten Metamodells die Interaktionen zwischen MVC-Controller und MVC-View einerseits und MVC-Model andererseits modelliert werden.

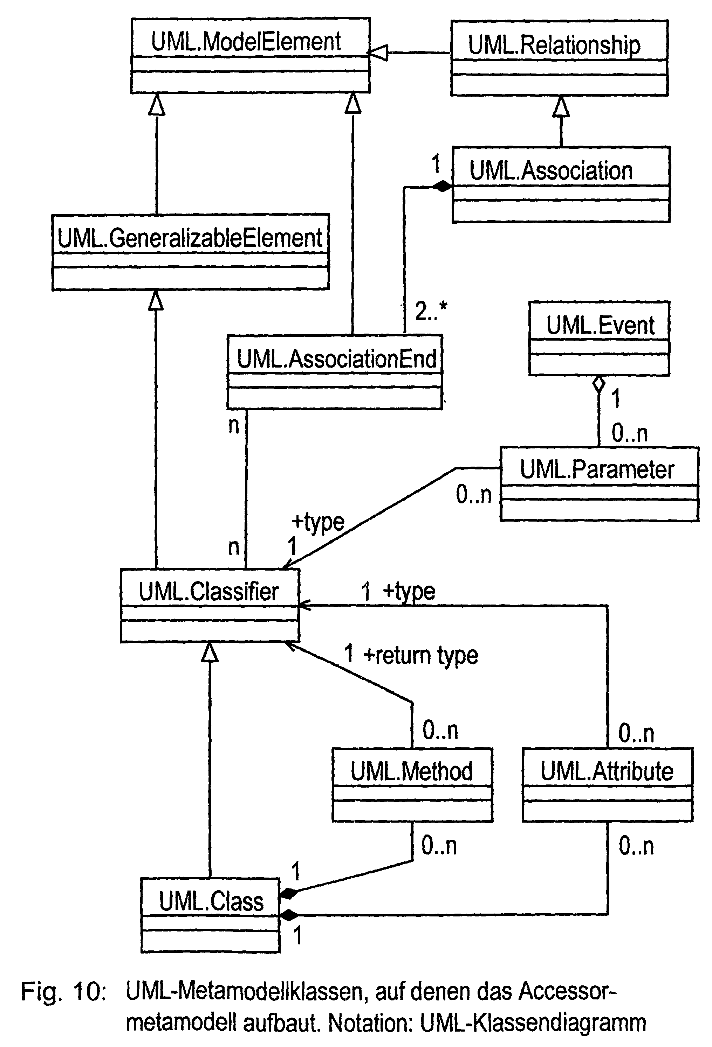

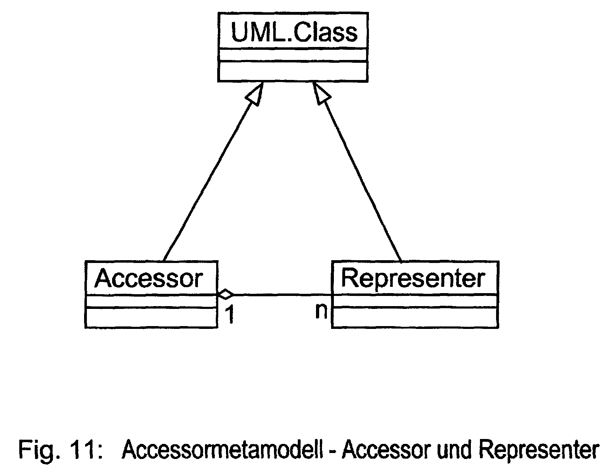

Fig. 10 zeigt die UML-Metamodellklassen, auf die das Accessormetamodell aufbaut, als UML-Klassendiagramm. In Fig. 11 bis Fig. 23 werden jeweils spezielle Aspekte des Accessormetamodells als UML-Klassendiagramm dargestellt.

### Accessor

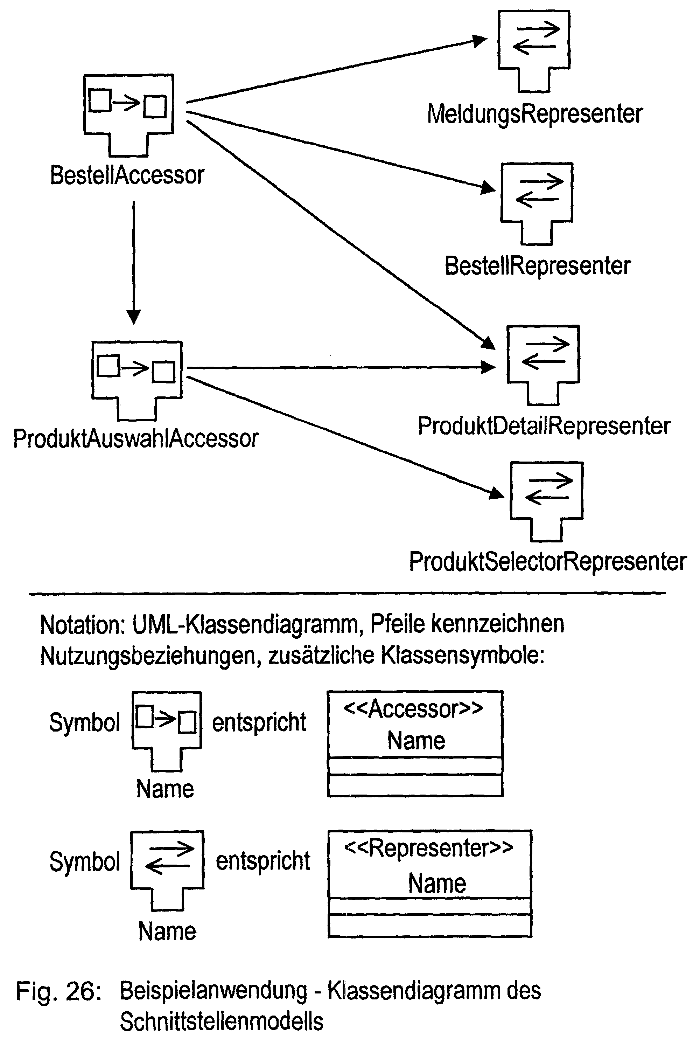

Im Mittelpunkt des Metamodells steht der Accessor als Spezialisierung des UML-Typs "Klasse", wie in Fig. 11 dargestellt. Ein Accessor in einem Anwendungsmodell stellt eine externe Schnittstelle des im Anwendungsmodell beschriebenen Softwaresystems dar. Er definiert Struktur und Verhalten dieser Schnittstelle. Zur Beschreibung eines Accessors sind alle Konstrukte der UML-Modellierung für Klassen erlaubt; Accessors haben z.B. Methoden und Attribute sowie beliebige Assoziationen zu anderen Klassen, insbesondere können sie von anderen Klassen erben und Schnittstellen implementieren. Darüberhinaus kann eine zu diesem Zweck erweiterte Form von Activitymodellen verwendet werden, um dynamische Eigenschaften des Accessors zu beschreiben. Bei der Modellierung eines Accessors wird nicht von vornherein festgelegt, ob eine Systemschnittstelle oder eine Benutzerschnittstelle beschrieben wird. Im MVC-Paradigma nimmt ein Accessor die Rolle eines MVC-Controllers ein.
Zur Bereitstellung der externen Schnittstelle nutzt ein Accessor einen oder mehrere Representer (s.u.), wie in Fig. 11 und Fig. 12 gezeigt, und kann andere Accessoren zur Erfüllung von Teilaufgaben als "Embedded Accessor" einbinden, was als Komposition von Accessoren bezeichnet wird und in Fig. 12 sowie detaillierter in Fig. 16 dargestellt ist.
Dadurch wird bereits in der Modellierung von externen Schnittstellen ein hohes Maß an Wiederverwendung von Modellelementen erreicht. Wiederverwendung auf Modellebene führt automatisch auch zu leichter, meist sogar automatischer, Wiederverwendung auf Implementierungsebene, wodurch Entwicklungskosten deutlich reduziert werden können. Fig. 26 zeigt ein Beispiel für die Wiederverwendung eines Modellelements: Zwei Accessorklassen nutzen die gleiche Representerklasse "Produktdetailrepresenter".

### Beispielbeschreibung für einen Accessor:

*Der Bestellaccessor ermöglicht dem Kunden, eine neue Bestellung anzulegen und zu bearbeiten (nutzt "Bestellrepresenter"). Der Kunde kann ein Produkt aus dem Warenbestand auswählen (Einbindung "Produktauswahlaccessor") und der Bestellung als Produkteintrag hinzufügen, wenn noch kein Eintrag für das entsprechende Produkt existiert. Anderenfalls wird ein entsprechender Hinweis ausgegeben (nutzt "Meldungsrepresenter"). Der Kunde kann zu jedem Produkteintrag die gewünschte Bestellmenge angeben. Produkteinträge können wieder aus der Bestellung entfernt werden. Zu jedem Produkteintrag in der Bestellung kann eine ausführliche Produktbeschreibung (nutzt "Produktdetailrepresenter") separat angezeigt werden. Der Kunde kann die Lieferart und die Zahlungsart wählen. Der Kunde kann die Bestellung entweder verwerfen oder ausführen und erhält im zweiten Fall eine Bestätigung (nutzt "Meldungsrepresenter").*

### Representer

Representer sind eine Spezialisierung des UML-Typs Klasse, wie in Fig. 11 dargestellt, und dienen der Beschreibung elementarer Schnittstellenelemente mit Eingabe-/Ausgabeeigenschaften. Eine externe Schnittstelle eines Systems kann aus einer oder mehreren Representern bestehen.

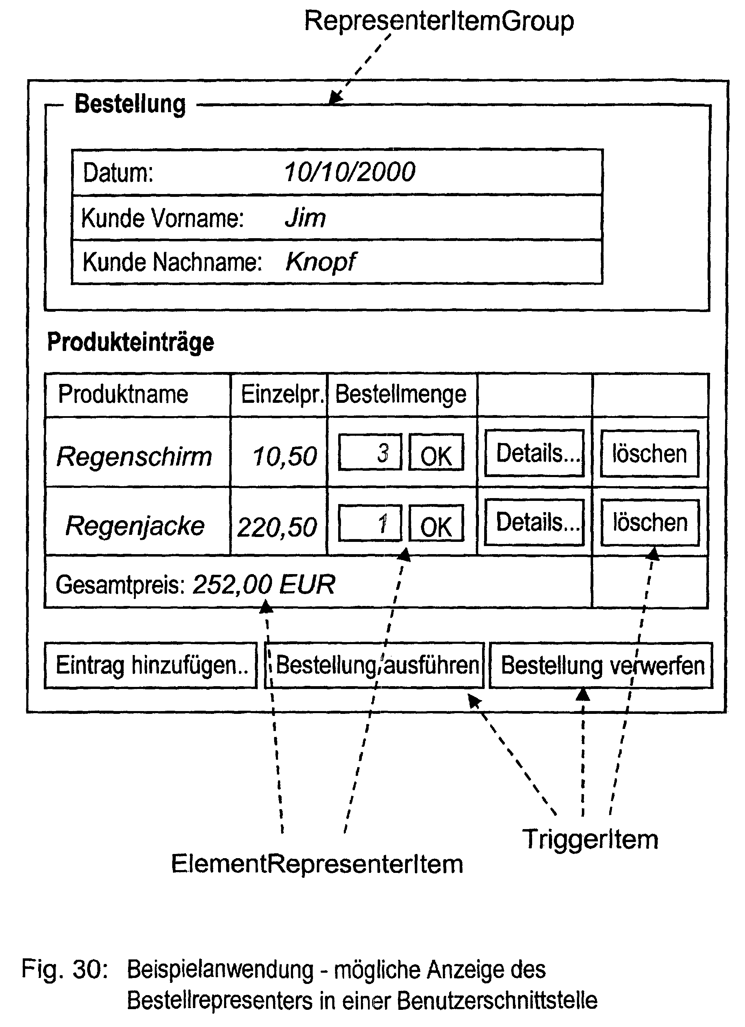

Ausgabeeigenschaften heißt, daß Representer Informationen aus dem Softwaresystem in einer für den Benutzer der externen Schnittstelle geeigneten Form ausgeben, z.B. als Maske in einer Benutzerschnittstelle mit grafischer Benutzeroberfläche oder als DOM (Document Object Model)-Element innerhalb eines XML-Dokuments, das von einer Systemschnittstelle verschickt und vom nutzenden System interpretiert wird. DOM und XML werden von der W3C (World Wide Web Consortium)-Organisation standardisiert und sind unter http://www.w3.org/DOM bzw. http://www.w3.org/XML beschrieben. Ein Beispiel für eine aus einem Representer abgeleitete Maske zeigt Fig. 30.

Eingabeeigenschaften sind Eingabemöglichkeiten, die der Representer wiederum in einer für den Benutzer der Schnittstelle geeigneten Form bereitstellt. Durch Nutzung der Eingabemöglichkeiten können durch den Benutzer Aktivitäten im betrachteten Softwaresystem ausgelöst werden.

Bezogen auf das MVC-Paradigma dient der Representer der Modellierung einer View. Hierbei ist jedoch zu beachten, daß in der Modellierung eines Representers noch keine Aussage über die konkrete Darstellung der Informationen oder zu verwendende Eingabeelemente getroffen wird, sondern nur darüber, welche Informationen im Representer dargestellt werden müssen und welche Eingabemöglichkeiten bereitgestellt werden sollen.

### Beispielbeschreibung für einen Representer:

*Der Representer "Bestellrepresenter" repräsentiert eine einzelne Bestellung. Er gibt dem Benutzer die Auftragsnummer der Bestellung, das Bestelldatum sowie eine Artikelliste mit Artikelnummer, Kurzbezeichnung, Einzelpreis, Bestellmenge und Gesamtpreis pro Listeneintrag aus. Der Bestellrepresenter bietet Eingabemöglichkeiten zum Ändern der Artikelliste durch Auswählen und Entfernen eines Eintrages* *oder Ändern der Bestellmenge eines Eintrages, Auswahl eines Artikels und Navigation zur Artikelbeschreibung, Auswahl eines Artikels und Navigation zu Kundenaussagen zum Artikel, zum Ausführen der Bestellung oder aber Verwerfen der Bestellung*.

### Erweitertes Activitymetamodell zur Beschreibung von Accessorverhalten

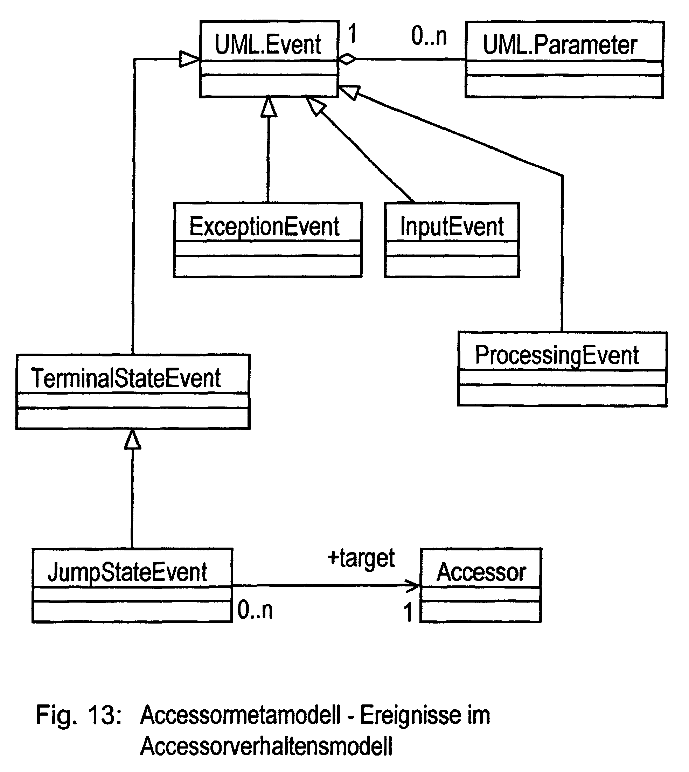

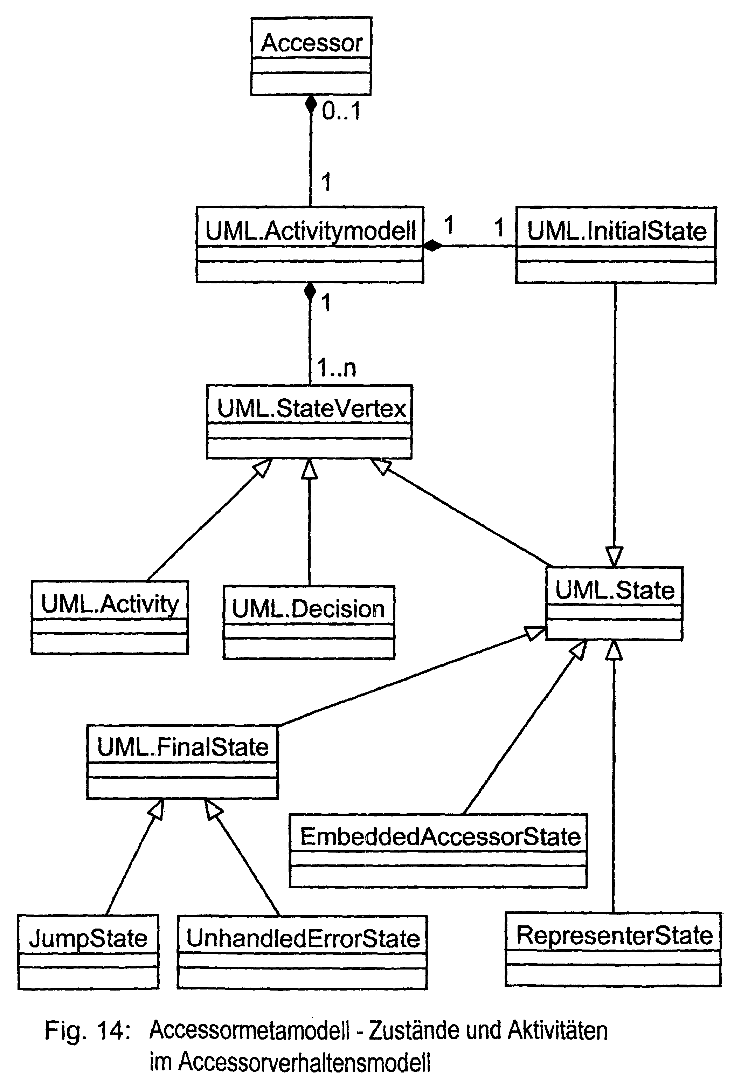

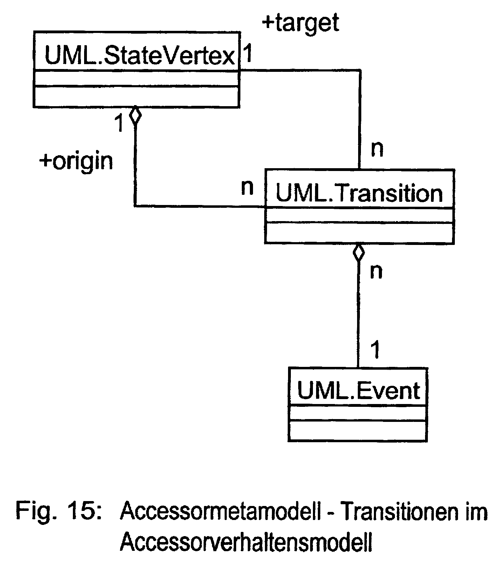

Zur Beschreibung des Verhaltens von Accessoren bietet das hier beschriebene Metamodell eine Erweiterung des UML-Activitymetamodells an. Zum erweiterten Activitymodell gehören die Elemente "Representer State", "Embedded Accessor State" und "Jump State", die jeweils Spezialisierungen des UML-Typs "State" sind, wie in Fig. 14 beschrieben, sowie das Element "Event" und seine Spezialisierungen "Terminal State Event", "Input Event", "Processing Event", "Jump State Event" und "Exception Event", wie in Fig. 13 dargestellt. Im folgenden wird die Semantik der Elemente erläutert. Fig. 15 zeigt, wie Zustände, Ereignisse und Transitionen im UML-Metamodell zusammenhängen.

### Representer State

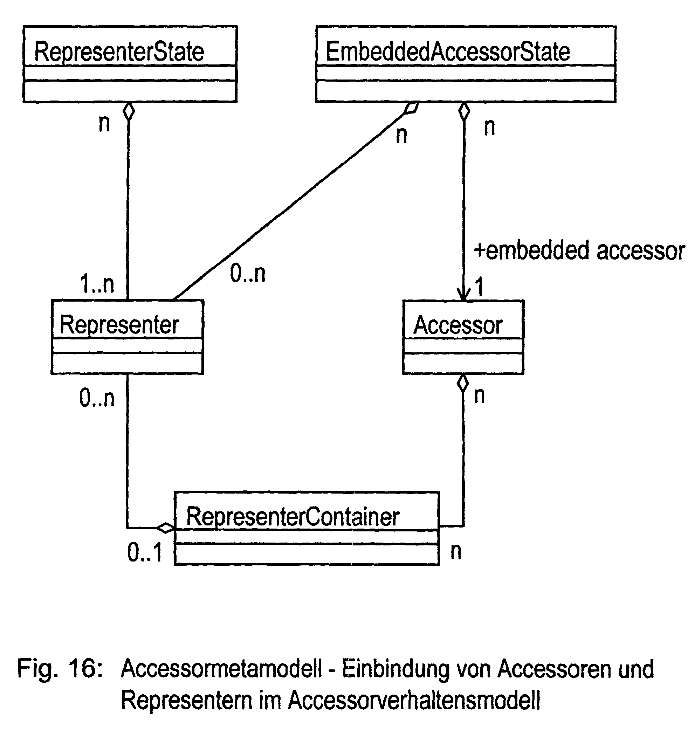

Ein Representer State in einem Anwendungsmodell beschreibt einen Zustand des Accessors, in dem ein oder mehrere Representer in einem aktiven Representercontainer (s.u.) bereitgestellt werden, wie in Fig. 16 gezeigt. In einer grafischen Benutzerschnittstelle entspricht das der Anzeige von Ausgabe- und Eingabeelementen, wie beispielsweise in Fig. 30. In einer Systemschnittstelle kann bei Eintritt in den Representer State z.B. ein XML-Dokument verschickt werden, das die Informationen des bzw. der Representer enthält. Die Schnittstelle würde dann auf ein entsprechendes Antwortdokument warten, mit dem das externe System, das die Systemschnittstelle benutzt, Eingaben vornehmen kann.

Die durch Eingaben in einen Representer ausgelösten Ereignisse werden als Input Events verarbeitet und können Transitionen im Activitymodell des Accessors auslösen.

### Embedded Accessor State

Mit Hilfe eines Embedded Accessor State kann, wie in Fig. 16 dargestellt, ein Accessor einen anderen Accessor einbinden. Beim Eintritt in einen Embedded Accessor State wird ein untergeordneter Accessor initialisiert und aktiviert. Der übergeordnete Accessor verbleibt im Embedded Accessor State, bis der untergeordnete Accessor einen Endzustand erreicht. Bei Erreichen des Endzustandes löst der eingebettete Accessor ein Terminal State Event aus, das im allgemeinen eine Transition im übergeordneten Accessor auslöst.

Der übergeordnete Accessor kann optional auch selbst einen oder mehrere eigene Representer in einem aktiven Representercontainer anbieten, während der eingebettete Accessor aktiv ist. Diese Representer sind dann gleichzeitig mit den Representem des untergeordneten Accessors aktiv, so daß beide Accessoren mit Input Events rechnen müssen. Das bedeutet, daß bei Eintritt in einen Embedded Accessor State, der selbst eigene Representer anbietet, eine Aufteilung des Kontrollflusses erfolgt.

Die beiden Fäden des Kontrollflusses können auf zwei Arten wieder zusammengeführt werden:
■ Erreicht der eingebettete Accessor einen Endzustand, so wird wie gehabt ein Terminal State Event ausgelöst, auf das der übergeordnete Accessor reagiert. Der untergeordnete Accessor ist danach nicht mehr aktiv, der übergeordnete Accessor hat je nach Ausgestaltung seines Activitymodells einen neuen Zustand eingenommen.
■ Erhält der übergeordnete Accessor ein Input Event, während der untergeordnete Accessor noch aktiv ist, und löst dieses Input Event einen Statusübergang im übergeordneten Accessor aus, so verläßt der übergeordnete Accessor den Embedded Accessor State. Dabei wird der untergeordnete Accessor deaktiviert und verworfen, ohne selbst einen Endzustand erreicht zu haben.

### Jump State

Ein Jump State ist ein besonderer Endzustand eines Accessors, bei dem der Accessor die Kontrolle an einen anderen Accessor (in der Rolle des Sprungziels, engl. "Jump Target") abgeben will. Im Gegensatz zum Embedded Accessor State erfolgt die Kontrollabgabe endgültig, d.h. mit Aktivierung des Sprungziels wird der aktuelle Accessor endgültig deaktiviert.

Ist der aktuelle Accessor in einen anderen Accessor eingebettet, so führt er bei Erreichen des Jump States den Sprung nicht selbst aus. Er legt den als Sprungziel gewünschten Folgeaccessor an, initialisiert ihn, aktiviert ihn jedoch nicht, sondern sendet ihn als Sprungzielparameter in einem Jump State Event an den übergeordneten Accessor. Der übergeordnete Accessor kann entscheiden, ob er dieses Jump State Event seinerseits einfach an seinen eigenen übergeordneten Accessor weiterleitet und so dem Sprung zustimmt oder ob er das Jump State Event abfangen will. Wenn jeder übergeordnete Accessor in einem Accessorstack das Event weiterleitet, erreicht es schließlich den Accessorcontainer, der daraufhin den Accessorstack deaktiviert und das im Event vermerkte Sprungziel aktiviert.

Um ein Jump State Event eines untergeordneten Accessors abzufangen, muß der übergeordnete Accessor einfach auf das entsprechende Jump State Event des untergeordneten Accessors reagieren. Im Modell des übergeordneten Accessors geschieht dies durch eine abgehende Transition von dem Embedded Accessor State, der den untergeordneten Accessor eingebunden hat.

### Activity und Decision

Im Rahmen der Accessormodellierung werden Activities und Decisions verwendet, um Verhalten des Accessors zu beschreiben, das sich nicht auf die Bereitstellung von Representern oder die Verwaltung untergeordneter oder nachfolgender Accessoren bezieht. Typischerweise finden alle Interaktionen eines Accessors mit einem zugrundeliegenden Modell (im Sinne von MVC) in Activities oder Decisions statt. Dabei können je nach Art der Interaktion unterschiedlichste Processing Events auftreten. Auf technischer Ebene werden Activities und Decisions gleich behandelt. Auf semantischer Ebene unterscheiden sie sich dadurch, daß Decisions lediglich Entscheidungen darstellen und im allgemeinen selbst keine Änderungen von Daten im Laufzeitsystem durchführen.

### Fehlerbehandlung

Ausgehend von der Annahme, daß in jedem Zustand und in jeder Transition eines Accessors Fehlersituationen auftreten können, wird der aus modernen objektorientierten Programmiersprachen bekannte Mechanismus zur Ausnahmebehandlung (Exception Handling) auf das Accessor-Activitymodell übertragen.

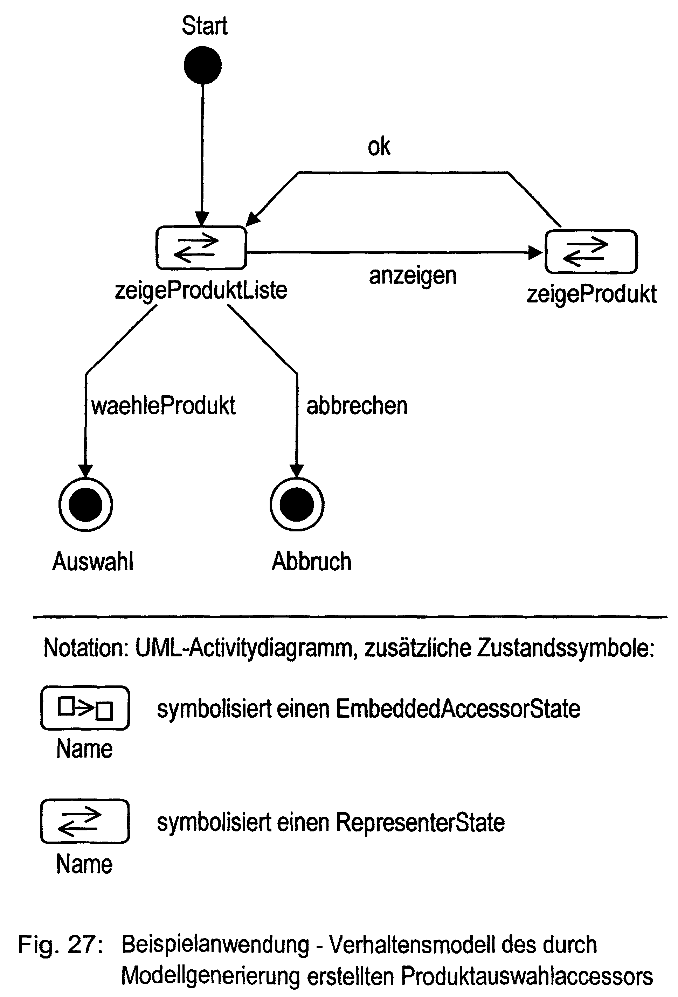

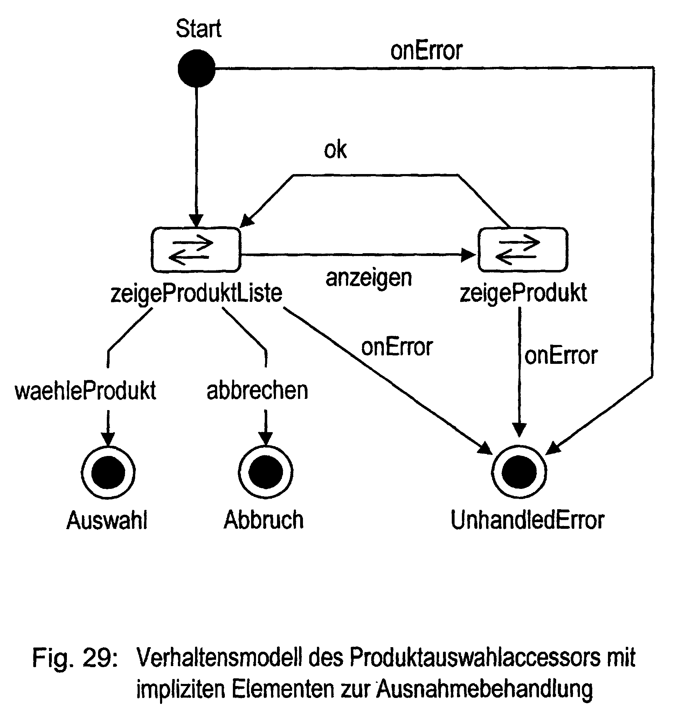

Exception Events beschreiben dabei Fehler in der Funktion eines Accessors. Exception Events müssen nicht explizit modelliert werden. Statt dessen wird in einem Anwendungsmodell jedes Activitymodell eines Accessors so interpretiert, als gäbe es einen speziellen Endzustand "UnhandledError" und von jedem anderen Zustand genau eine Transition "onError" zum Endzustand "UnhandledError", die jeweils von einem Exception Event im Ausgangszustand ausgelöst wird. Fig. 27 zeigt als Beispiel das Activitymodell eines Accessors ohne die hier beschriebenen Bestandteile der Fehlerbehandlung. In Fig. 29 werden für das gleiche Activitymodell zusätzlich die drei impliziten Transitionen "onError" von den modellierten Zuständen "Start", "zeigeProduktListe" und "zeigeProdukt" hin zum impliziten Endzustand "UnhandledError" gezeigt.

Genau wie beim Erreichen eines normalen Endzustandes wird beim Erreichen des Endzustandes "UnhandledError" ein Terminal State Event ausgelöst, das in einem übergeordneten Accessor oder vom Accessorcontainer registriert und verarbeitet werden kann. Das entspricht dem Fangen (engl. "catch") einer Exception z.B. in den Programmiersprachen Java oder C++. Erfolgt keine explizite Verarbeitung des Fehlerereignisses im jeweils übergeordneten Accessor, so wird dies wiederum als Fehler (Exception Event) interpretiert und im übergeordneten Accessor die entsprechende Fehlertransition vom Embedded Accessor State zu dessen Endzustand "UnhandledError" ausgelöst.

### Resourcemappings zur Beschreibung des Datenflusses im erweiterten Activitymodell

Mit den bisher beschriebenen Elementen wie speziellen Zuständen, Aktivitäten, Ereignissen und dadurch ausgelösten Transitionen kann der Kontrollfluß eines Accessors in einem Anwendungsmodell beschrieben werden. Ein weiterer wesentlicher Schritt zur umfassenden Modellierung eines Accessors ist die Beschreibung des Datenflusses. Das Accessormetamodell sieht hierfür eine Abstraktion mit dem Namen Resourcemapping vor. Resourcemappings werden an verschiedenen Stellen des Metamodells eingebunden, um die Übergabe von Daten im Anwendungsmodell eines Accessors beschreiben zu können.

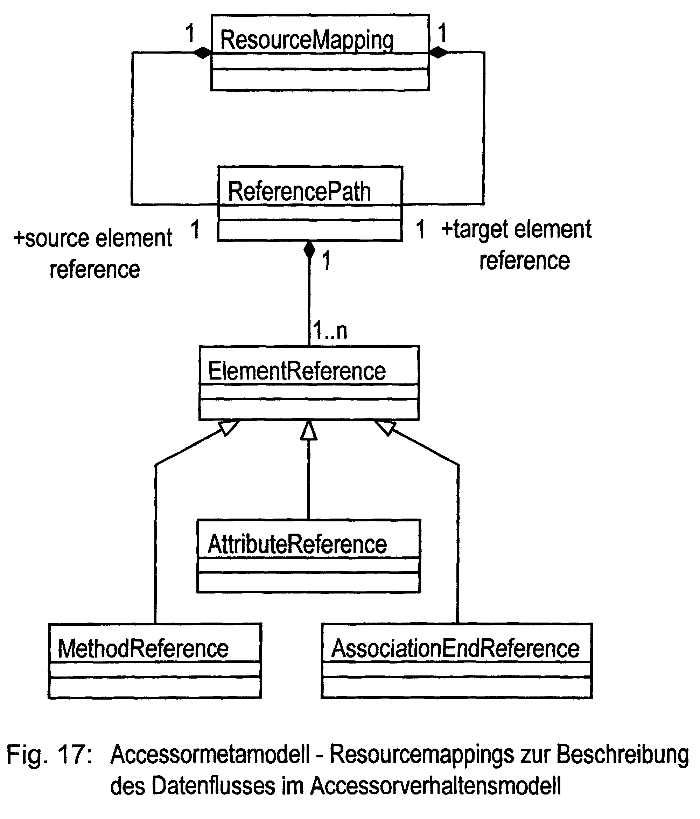

Ein Resourcemapping kann allgemein als Vorschrift zur Übertragung eines einzelnen Wertes von einem Quellelement zu einem Zielelement zu einem definierten Zeitpunkt des Systemlaufs verstanden werden. Der Wert ist dabei der aktuelle Wert des Quellelements, das über die Quellreferenz des Resourcemappings referenziert wird. Er wird übertragen auf das Zielelement, das über die Zielreferenz des Resourcemappings angegeben wird. Quellreferenz und Zielreferenz werden mit Hilfe eines Referenzpfades (engl. "Reference Path") beschrieben, wie in Fig. 17 dargestellt. Details über die Eigenschaften eines Referenzpfades und die referenzierbaren Elemente sind im Abschnitt "Element Representer Item" des Kapitels "Metamodell zur Beschreibung von Representern" weiter unten beschrieben.

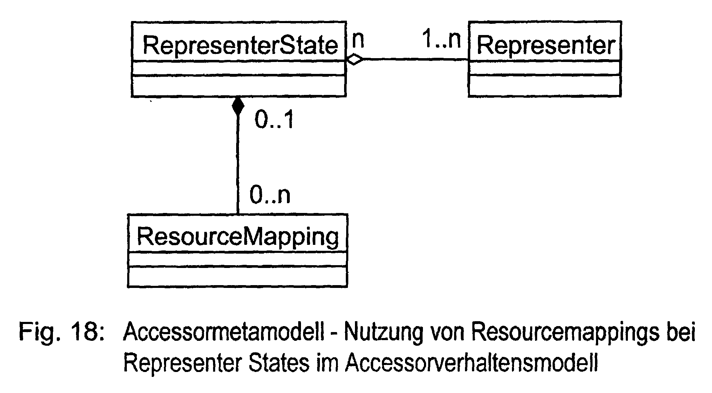

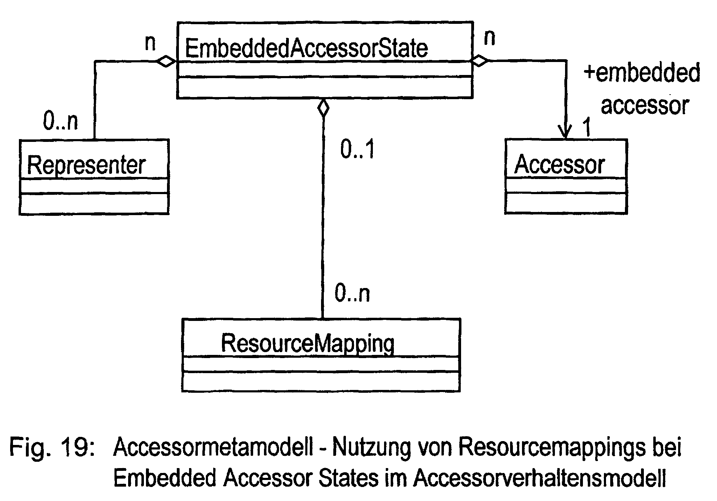

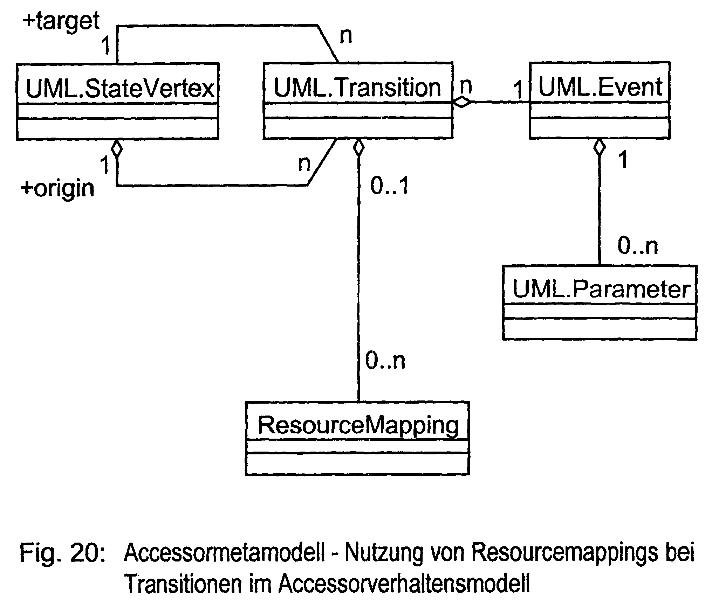

Resourcemappings sind bisher an drei Stellen des Metamodells vorgesehen:
■ Resourcemappings bei Transitionen, wie in Fig. 20.
   Hier erfolgt typischerweise eine Übertragung von Werten aus Elementen des auslösenden Events auf Elemente des Accessors, der im Modell beschrieben wird, also des Accessors, zu dem letztlich auch der Zustandsübergang und das betrachtete Resourcemapping gehört. Das Resourcemapping ist aber nicht darauf beschränkt.
■ Resourcemappings bei Representer States, wie in Fig. 18.
   Einem Representer State sind ein oder mehrere Representer zugeordnet, die ggf. initialisiert werden müssen, bevor sie bei einem aktiven Representercontainer registriert werden können, um dann bei Bedarf ihre jeweilige Repräsentation erzeugen zu können. Resourcemappings an Representer States erlauben die Modellierung dieser Initialisierung. Dabei werden typischerweise Werte aus Elementen des beschriebenen Accessors auf Elemente des/der Representer abgebildet.
■ Resourcemappings bei Embedded Accessor States, wie in Fig. 19.
   Einem Embedded Accessor State können ebenso wie einem Representer State Representer zugeordnet werden, die ggf. initialisiert werden müssen. Zusätzlich ist einem Embedded Accessor State genau ein Accessor in der Rolle des "embedded Accessor" zugeordnet, der ebenfalls initialisiert werden muß. Hier werden Resourcemappings in Anwendungsmodellen typischerweise benutzt, um Werte aus Elementen des aktuellen Accessors auf Elemente des untergeordneten Accessors zu übertragen.

Resourcemappings zur Modellierung von Wertübertragungen sind ein allgemeines Konzept im Rahmen des Verfahrens und können allgemein zur Modellierung des Datenflusses im Rahmen von Verhaltensbeschreibungen verwendet werden. Hierzu kann das Metamodell leicht so erweitert werden, daß nicht nur den o.g. speziellen Zuständen Resourcemappings zugeordnet werden können, sondern jedem Zustand und jeder Aktivität.

Eine weitere Verfeinerung des Konzepts ist die Möglichkeit, Resourcemappings gezielt einem der im Rahmen der UML-Spezifikation vordefinierten Bearbeitungszeitpunkte innerhalb eines States zuzuordnen, also z.B. bei Eintritt in den Zustand als Hauptaktivität des Zustandes oder bei Verlassen des Zustandes.

Als dritte nützliche Erweiterung kann das Metamodell so ausgestaltet werden, daß einem einzelnen Resourcemapping in einem Anwendungsmodell ein Resourcemapping-Converter zugeordnet werden kann, der beschreibt, wie bei der Wertübertragung der Wert aus dem Quellelement konvertiert werden muß, bevor er dem Zielelement zugeordnet wird. So können z.B. Typinkompatibilitäten zwischen Quellelement und Zielelement bereits im Modell explizit behandelt werden, wenn z.B. das Quellelement einen Wert vom Typ Integer liefert, das Zielelement aber nur Werte des Typs Double aufnehmen kann. Die Wertumwandlung kann beliebig komplex sein und z.B. zur Betragsumrechnung herangezogen werden, wenn die Werte von Quellelement und Zielelement Betragsangaben in unterschiedlichen Währungen sein sollen. Jede beliebige Art von Wertumwandlung kann im Anwendungsmodell durch Modellierung einer entsprechenden Spezialisierung des Resourcemapping-Converters vorgesehen werden.

### Metamodell zur Beschreibung von Representern

Representer sind, wie oben bereits beschrieben, die elementaren Schnittstelleneinheiten einer externen Schnittstelle. Sie haben die Aufgabe, dem Benutzer der Schnittstelle Informationen aus dem System zur Verfügung zu stellen und umgekehrt Eingaben von Seiten des Schnittstellenbenutzers entgegenzunehmen.

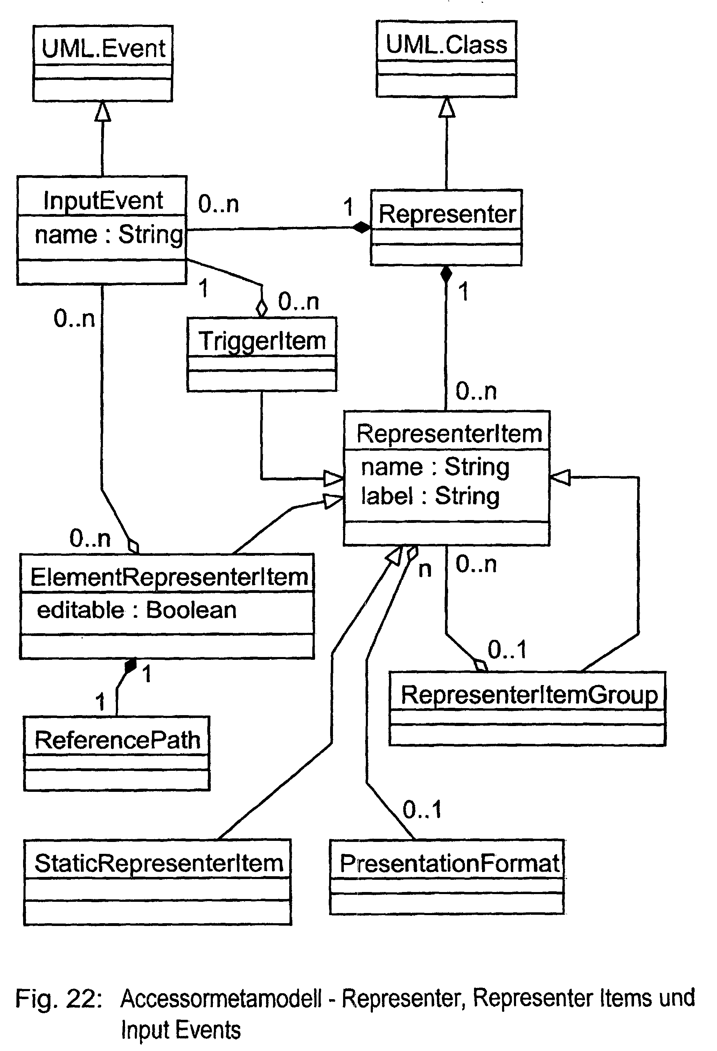

Um diese Aufgaben eines Representers in einem Anwendungsmodell ausführlich zu beschreiben, wird das Representermetamodell verwendet, das Teil des Accessormetamodells ist. Der Representer ist auf Metamodellebene eine Erweiterung des UML-Typs Klasse, wie in Fig. 11 dargestellt, und verwaltet, wie aus Fig. 22 zu ersehen, eine Menge von Representer Items und Input Events, die als Abstraktion der Ausgabe- bzw. Eingabemöglichkeiten dienen.

### Representer Item

Ein Representer Item ist Teil eines Representers und stellt die kleinste innerhalb der Schnittstelle nutzbare Informationseinheit dar. Die Einbindung in einen Representer und der Bezug von Representer Items zu anderen Elementen des Representermetamodells sind in Fig. 22 veranschaulicht. Das Representer Item beschreibt dabei eine einzelne Information, die dem Benutzer der Schnittstelle zur Verfügung gestellt wird. Jedes Representer Item verfügt über einen im Namensraum des Representers eindeutigen logischen Namen, über den eine Referenzierung des Modellelements möglich ist, und ein Label, das als sinntragende Kurzbezeichnung für das Element verwendet werden soll. Labels müssen nicht eindeutig sein und können zur Laufzeit des Systems kontextabhängig verändert werden, z.B. zur Anpassung an eine gewählte Sprache bei externen Schnittstellen, die verschiedene Sprachen unterstützen.

Einem Representer Item kann optional eine Darstellungsvorschrift zugeordnet werden. Darstellungsvorschriften können durch die Metamodellabstraktion Presentation Format ausgedrückt werden. Ein Beispiel für eine Darstellungsvorschrift ist die Festlegung der Exponentialschreibweise als Ausgabeformatierung für Gleitkommazahlen.

Im Representermetamodell existieren die Abstraktionen Static Representer Item, Element Representer Item und Trigger Item als Spezialisierungen des Representer Items zur Beschreibung von verschiedene Arten elementarer Informationseinheiten in Anwendungsmodellen. Representer Item Groups sind ebenfalls eine Spezialisierung des Representer Items und dienen der Beschreibung logischer Gruppen von Representer Items.

### Static Representer Item

Eine Einzelinformation in einem Representer kann eine Konstante sein, z.B. ein statischer Text als Beschreibung eines anderen Elements. Zur Ausführungszeit unveränderliche Representer Items werden durch die Spezialisierung Static Representer Item ausgedrückt. Sie können im einfachsten Fall einen zum Modellierungszeitpunkt festgelegten Text enthalten. Weitere Spezialisierungen des Static Representer Items sind möglich, um andere zum Modellierungszeitpunkt beschreibbare statische Inhalte in einem Anwendungsmodell ausdrücken zu können. Beispiel:
*Der Bestellrepresenter enthält folgenden Text als Hinweis auf die AGBs: "Es gelten die allgemeinen Geschäftsbedingungen für Warengeschäfte der Meier und Müller GmbH".*

### Element Representer Item

Eine in einem Representer gegebene Information ist häufig dynamisch, d.h. sie kann zur Modellierungszeit nicht festgelegt werden, sondern wird erst während des Systemlaufs ermittelt und gibt den aktuellen Wert eines veränderlichen Laufzeitobjekts im Softwaresystem wieder. Eine dynamische Einzelinformation kann im Anwendungsmodell eines Representers durch ein Element Representer Item beschrieben werden.

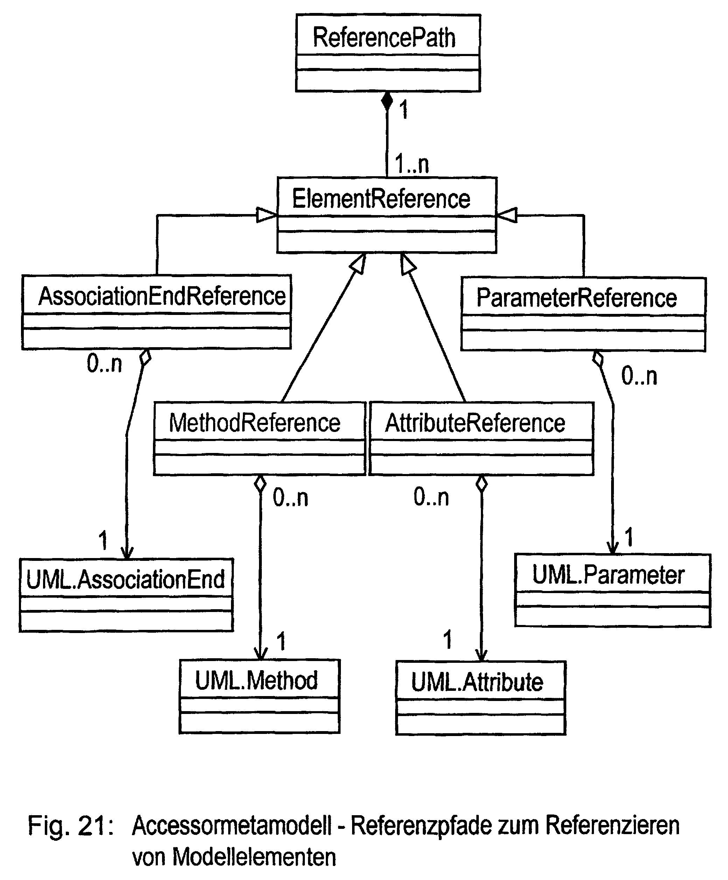

Das Element Representer Item wird in einem Anwendungsmodell so modelliert, daß es weiß, wo es zur Laufzeit den zu verwendenden Wert beziehen kann. Dafür wird ein Reference Path angelegt, der auf ein anderes Modellelement verweist, dessen jeweils aktueller Wert verwendet werden soll. Der Reference Path bildet einen Navigationspfad ausgehend vom Representer, zu dem das Element Representer Item gehört, hin zu einem anderen Modellelement. Wie in Fig. 21 gezeigt, erfolgt die Beschreibung des Reference Path durch eine geordnete Liste von Element References, die als elementare Navigationsschritte zu verstehen sind. Während des Systemlaufs kann der Representer den Wert des durch ein Element Representer Item referenzierten Elements durch sequentielle Ausführung der Navigationsschritte ermitteln.

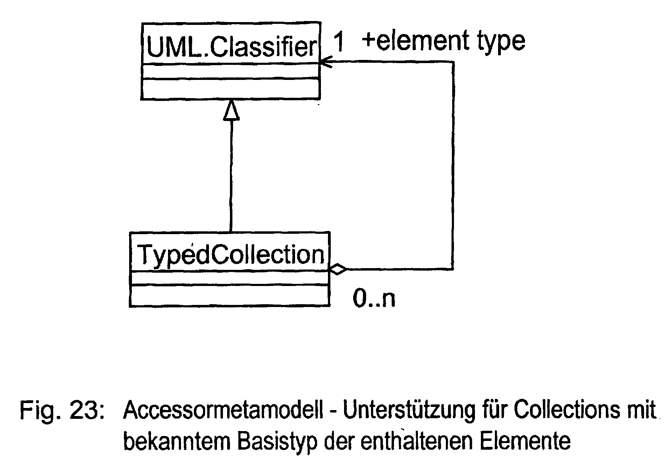

Für die Bildung des Reference Path gelten folgende Regeln:
■ Jede Element Reference muß sich auf ein öffentliches Element vom Typ Association End, Method, Attribute oder Parameter desjenigen Classifiers beziehen, der dem Typ (UML Associated Class Type, UML Method Retum Type, UML Parameter Type oder UML Attribute Type) des Elements entspricht, das von der vorherigen Element Reference referenziert wurde.
■ Die erste Element Reference im Reference Path muss sich auf ein Element (UML Association End, UML Method, UML Attribute, UML Parameter) des enthaltenden Representertyps beziehen. In diesem Fall ist auch eine Referenz auf ein nichtöffentliches Element zulässig.
■ Wenn der Typ eines in einer Element Reference referenzierten Elements ein Typed Collection Classifier ist, der wie in Fig. 23 dargestellt eine Spezialisierung des UML Classifiers ist, so kann die nächste Element Reference sich entweder auf ein Element der Typed Collection selbst beziehen oder auf ein Element, das zum Typ der Objekte in der Typed Collection gehört.

Zur Referenzierung von UML Association Ends, UML Methods, UML Parameters und UML Attributes stehen im Metamodell die in Fig. 21 gezeigten spezialisierten Element Reference Typen Association End Reference, Method Reference, Parameter Reference und Attribute Reference zur Verfügung.

Bezieht sich der Reference Path eines Element Representer Items auf ein UML Association End oder ein UML Attribute, so kann zusätzlich angegeben werden, ob der Wert des referenzierten Elements nur angezeigt werden soll oder auch geändert werden kann. Die Änderung von Werten durch Element Representer Items ist eine von zwei Varianten, Eingabemöglichkeiten, die ein Representer bereitstellen soll, zu beschreiben. Die zweite Variante wird durch Trigger Items beschrieben (s.u.).

Element Representer Item können Ereignisse in Form von Input Events auslösen. Ein Beispiel hierfür sind Ereignisse elementarer Eingabeelemente, wie etwa eine abgeschlossene Benutzereingabe, die zu einer Wertänderung geführt hat.

### Beispiel 1: Element Representer Item zur Anzeige des Rückgabewerts einer Methode eines Fachobjekts

*Der Bestellrepresenter zeigt den jeweils aktuellen Gesamtpreis der angegebenen Waren unter Berücksichtigung von Bestellmenge und Bestellmengeneinheit als "Summe" an. Die Berechnung des Gesamtpreises erfolgt durch das Fachobjekt Bestellung, auf das über das Attribut "aktuelleBestellung" des Bestellrepresenters zugegriffen werden kann. Die vollständige Referenz auf den dynamischen Anzeigewert ist*
*"Selbstreferenz*.*aktuellerRepresenter[BestellRepresenter] :*
*Attribute.aktuelleBestellung[Bestellung]:Methode.berechneGesamtpreis[Double]". Die Darstellungsvorschrift ist "immer 2 Nachkommastellen angeben, Tausenderpunkte für Vorkommastellen verwenden, Kommasymbol ist ein Punkt, Tausenderpunktsymbol ist ein Komma (US-Format)".*
Eine einfache Java-Implementierung für dieses Beispiel in einem Representer könnte so aussehen:

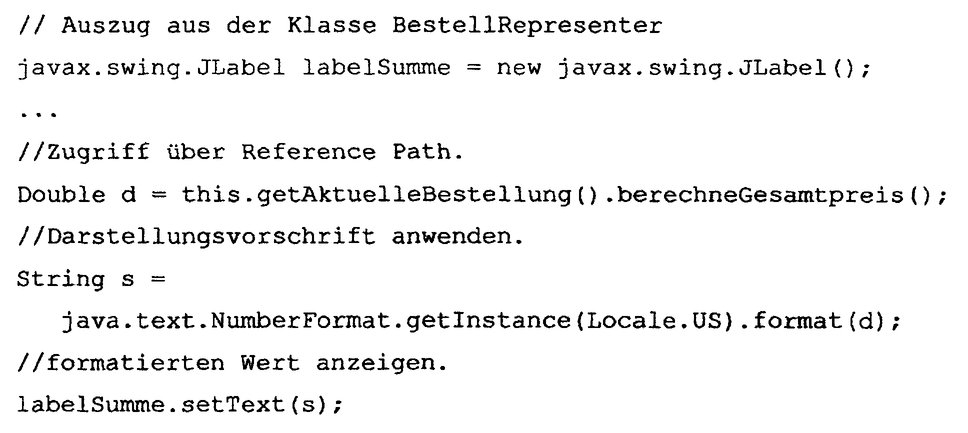

### Beispiel 2: Element Representer Item zur Anzeige und Änderung des Wertes eines Attributes eines Fachobjekts

*Der Bestellrepresenter zeigt zu jedem Produkteintrag in der Liste der bestellten Produkte die aktuelle Bestellmenge an und läßt eine Änderung der Bestellmenge zu. Die vollständige Referenz auf den dynamischen Wert ist:*
*"Selbstreferenz.aktuellerRepresenter[BestellRepresenter]:*
*Attribute.selektierterProduktEintrag[ProduktEintrag]:*
*Attribute.Bestellmenge[Integer]"*
*Die Darstellungsvorschrift ist "Tausenderpunkte verwenden, Tausenderpunktsymbol ist ein Komma (US-Format)"*.

Für die Beschreibung des Reference Path wurde im Beispiel die folgende Notation verwendet:
■ Der Element Path enthält eine Liste von Element References, die durch einen Doppelpunkt getrennt werden.
■ Jede Element Reference ist in der Form *<Art der Referenz>.<referenziertes Element>[<Typ des referenzierten Elements>]* angegeben.

### Trigger Items und Input Events

Um im Anwendungsmodell eines Representers direkte Benutzereingabemöglichkeiten auszudrücken, können Trigger Items als Spezialisierung der Representer Items verwendet werden. Sie beschreiben spezielle Eingabemöglichkeiten, die dem Benutzer der Schnittstelle erlauben, zugeordnete Input Events auszulösen.

### Beispiel:

*Der Bestellrepresenter stellt ein Eingabeelement zur Verfügung, das dem Benutzer erlaubt, die bearbeitete Bestellung auszuführen.*

### Konzeptionelle Abstraktion von Laufzeitumgebungen

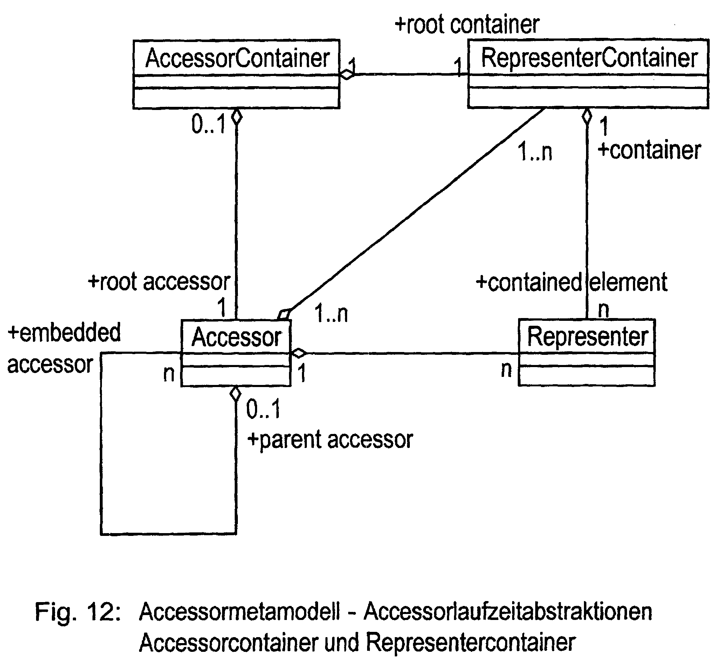

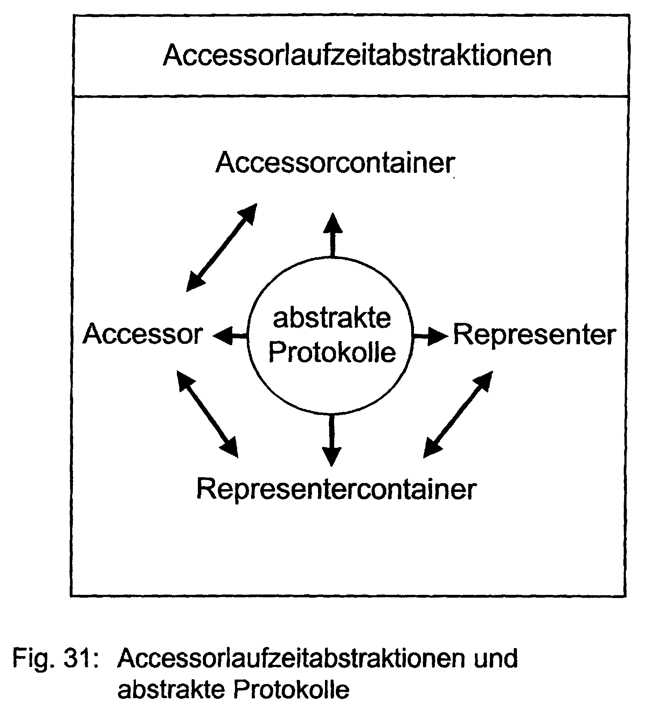

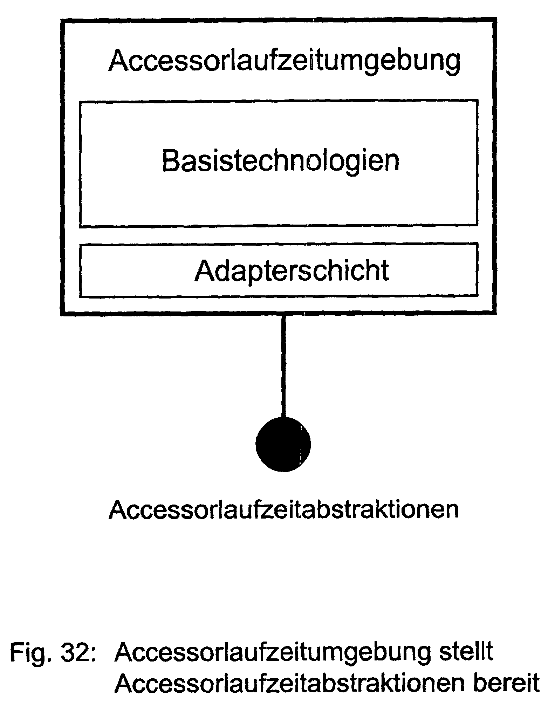

Bisher wurden die Eigenschaften von Accessoren und Representern ausführlich erläutert, und es wurde gezeigt, wie sie in Schnittstellenmodellen beschrieben werden können. Im folgenden soll erklärt werden, wie die Accessoren und Representer in Ausführungsumgebungen eingebettet werden können. Es werden dafür die in Fig. 12 dargestellten Accessorlaufzeitabstraktionen Accessorcontainer und Representercontainer eingeführt, die abstrakte Eigenschaften definieren, die von Laufzeitumgebungen bereitgestellt werden müssen, um als Accessorlaufzeitumgebungen genutzt werden zu können. Das Zusammenspiel der Elemente Accessor, Representer, Accessorcontainer und Representercontainer wird, wie in Fig. 31 dargestellt, durch abstrakte Protokolle beschrieben. Abstrakt heißt dabei, daß für diese Protokolle noch keine konkreten Schnittstellen der teilnehmenden Komponenten definiert sind. Die konkreten Schnittstellen und die darauf aufbauenden konkreten Protokolle, die die abstrakten Protokolle implementieren, können je nach den gewählten Basistechnologien für eine Laufzeitumgebung unterschiedlich gestaltet werden. Wo möglich werden Eigenschaften - z.B. konkrete Protokolle, Schnittstellen und Implementierungen - einer Basistechnologie verwendet, um die Accessorlaufzeitabstraktionen zu implementieren. Fig. 32 zeigt, wie Ergänzungen, die zum Bereitstellen der Accessorlaufzeitabstraktionen auf Grundlage einer Basistechnologie erforderlich sind, in einer Adapterschicht bereitgestellt werden können.

### Accessorcontainer

Der Accessorcontainer ist eine Abstraktion für Dienste, auf die ein Accessor zur Erfüllung seiner Aufgabe zugreifen kann. Der Accessorcontainer aktiviert bei Bedarf Accessoren, stellt den obersten Representercontainer (s.u.) bereit, verwaltet globale Konfigurationsparameter und abstrahiert eine vorgegebene Ausführungsumgebung, um Dienste der Ausführungsumgebung den Accessoren in vereinfachter Art zur Verfügung zu stellen, z.B. die Benachrichtigung über Ereignisse. Accessorcontainer sind oft die zentralen Objekte einer eigenständig ausführbaren Anwendung, die auf einer Datenverarbeitungseinrichtung abläuft, z.B. implementiert als Servlets im Kontext von Web Applications oder als ausführbare Java-Klassen, die dann einen Frame (java.awt.Frame oder javax.swing.JFrame) als obersten Representercontainer anlegen.

Der Accessorcontainer kann als das führende Controller Objekt im Sinne von MVC verstanden werden. Alle weiteren Accessoren werden direkt durch den Accessorcontainer oder indirekt durch einen Accessor, der vom Accessorcontainer angelegt wurde, angelegt und gesteuert. Ineinander eingebettete Accessoren bilden dabei einen Accessorstack, dessen oberster Accessor als Hauptaccessor (engl.: "Root Accessor") bezeichnet wird.

Es ist naheliegend, aber nicht zwingend erforderlich, den Accessorcontainer im Implementierungsdesign einer Adapterschicht als einen spezialisierten Accessor zu behandeln, da jeder Accessor im Rahmen der Komposition ohnehin genau die Fähigkeit zum Anlegen und Verwalten untergeordneter Accessoren besitzt, die ein Accessorcontainer auch zum Anlegen und Verwalten des Hauptaccessors benötigt.

Accessorcontainer werden im allgemeinen bei der Erstellung eines Schnittstellenmodells nicht explizit modelliert, sondern können vom Modellierer als Teil der Accessorinfrastruktur vorausgesetzt werden.

### Representercontainer

Ein Representercontainer ist die Ausführungsumgebung für einen oder mehrere Representer. Representer können von Accessoren in Representercontainer eingefügt oder daraus entfernt werden. Der Representercontainer sorgt dafür, daß die Schnittstellenmethoden eines eingefügten Representers für den Benutzer der externen Schnittstelle verfügbar werden. Representercontainer können komponiert werden und so eine Hierarchie von Representercontainern bilden, ausgehend vom Hauptcontainer (engl.: "Root Container"), der wie in Fig. 12 dargestellt, als oberster Representercontainer direkt vom Accessorcontainer verwaltet wird.
Representercontainer, die nicht direkt oder indirekt im Hauptcontainer enthalten sind, und die in ihnen registrierten Representer sind nicht aktiv, d.h. die Schnittstellenmethoden dieser Representer stehen nicht zur Verfügung. Ein Representer ohne Representercontainer ist ebenfalls nicht aktiv.

In Representercontainern können durch Komposition unabhängiger Representer komplexere Schnittstelleneinheiten gebildet werden.

Representercontainer bilden eine Abstraktion über bestehende Schnittstellenimplementierungstechnologien und stellen den Representem Dienste zur Verfügung, wie z.B. die Benachrichtigung über Ereignisse oder die externe Bereitstellung der Schnittstellenmethoden des Representers. Dies geschieht z.B. durch Zeichnen (engl.: "Rendering") von Schnittstellenelementen einer grafischen Benutzerschnittstelle. So definiert die Schnittstelle eines Representercontainers z.B. Methoden zur Registrierung oder Deregistrierung von Representern zur Nutzung im Rahmen der entsprechenden Protokolle. Die Implementierung dieser Methoden kann für unterschiedliche Accessorlaufzeitumgebungen erfolgen:
Beispiel 1: Implementierung für eine grafische Benutzerschnittstelle auf der Grundlage der Swing-Klassenbibliothek der Firma SUN Microsystems. Hier gibt es bereits die Containerklasse java.awt.Container und davon abgeleitete Komponenten, z.B. javax.swing.JPanel, die die gewünschte Eigenschaft haben, elementare Schnittstellenelemente in Form von AWT (Abstract Window Toolkit)-Komponenten oder Swing-Komponenten zu höherwertigen Einheiten komponieren zu können.
Beispiel 2: Implementierung für eine Systemschnittstelle auf der Basis von XML-Dokumenten. Hier kann ein XML-Dokument die Rolle eines zentralen Representercontainers annehmen. Das Hinzufügen von Representern erfolgt hier durch Einfügen von XML-Elementen in die DOM-Hierarchie des XML-Dokuments.

Representercontainer können auch als individuelle Sichten auf einen gemeinsamen Darstellungsbereich verstanden werden. Ein Darstellungsbereich in einer grafischen Benutzerschnittstelle, in dem mehrere Representer ihre jeweiligen GUI-Elemente einfügen sollen, kann z.B. das Hauptfenster einer Anwendung sein. In einer Systemschnittstelle kann ein Dokument (z.B. XML-Dokument) ein gemeinsamer Darstellungsbereich für verschiedene Representer sein. Die Aufteilung des gemeinsamen Darstellungsbereichs soll keine zusätzlichen Abhängigkeiten zwischen Accessoren mit sich bringen. So soll insbesondere ein eingebetteter Accessor keine Kenntnis darüber haben müssen, wie der ihm übergeordnete Accessor den Darstellungsbereich nutzt. Vielmehr ist es wünschenswert, daß ein untergeordneter Accessor vom übergeordneten einen Teil des Darstellungsbereichs einfach zugewiesen bekommt. Diese Zuweisung kann mit Hilfe eines vom übergeordneten Accessor bereitgestellten Representercontainers erfolgen, der dem untergeordneten Accessor nur eine eingeschränkte Sicht auf den Gesamtdarstellungsbereich gibt

### Basisprotokolle

Die Interaktion der vier elementaren Typen Accessor, Representer, Accessorcontainer und Representercontainer erfolgt wie in Fig. 31 dargestellt über Basisprotokolle, die zunächst abstrakt definiert sind. Sie werden in einer Accessorlaufzeitumgebung durch konkrete Protokolle und Schnittstellen der Komponenten implementiert.

Protokolle beschreiben das Zusammenspiel von Komponenten eines Softwaresystems als Teil der Verhaltensbeschreibung. Das Verfahren sieht, wie oben beschrieben, die Verhaltensbeschreibung von Schnittstellen durch ein erweitertes Activitymodell vor. Im folgenden soll anhand einiger Beispiele beschrieben werden, welche abstrakten Protokolle bei Transitionen zwischen unterschiedlichen Arten von Zuständen im Verhaltensmodell eines Accessors ablaufen.

Die Beschreibung erfolgt jeweils bezogen auf den Eintritt in den betrachteten Zustand infolge einer Transition, oder bezogen auf das Verlassen des betrachteten Zustands infolge eines Ereignisses, das eine Transition auslöst. Konkret werden folgende Situationen betrachtet:
■ Aktivierung eines Accessors,
■ Eintritt in einen Representer State,
■ Verlassen eines Representer States,
■ Eintritt in einen Embedded Accessor State ohne zugeordneten Representer,
■ Verlassen eines Embedded Accessor State,
■ Eintritt in einen Embedded Accessor State mit eigenem Representer,
■ Verlassen eines Embedded Accessor State durch Ereignis im eigenen Representer,
■ Eintritt in einen Endzustand,
■ Eintritt in einen Jump State.

Für die Beschreibungen werden folgende Namen festgelegt:
■ "Accessor" bezeichnet den konkreten Accessor, dessen Activitydiagramm betrachtet wird.
■ "Unteraccessor" bezeichnet den Accessor, der in einem Embedded Accessor State in den Accessor eingebettet wird.
■ "Representer" bezeichnet den konkreten Representer, der in einem Representer State oder einem Embedded Accessor State verwendet wird. Das Metamodell läßt die Zuordnung mehrerer Representer zu beiden Arten von Zuständen zu. In den Beispielen wird diese Möglichkeit nicht genutzt.
■ "Representercontainer" bezeichnet den konkreten Representercontainer, den der betrachtete Accessor für seine Representer verwendet.

### Aktivierung eines Accessors

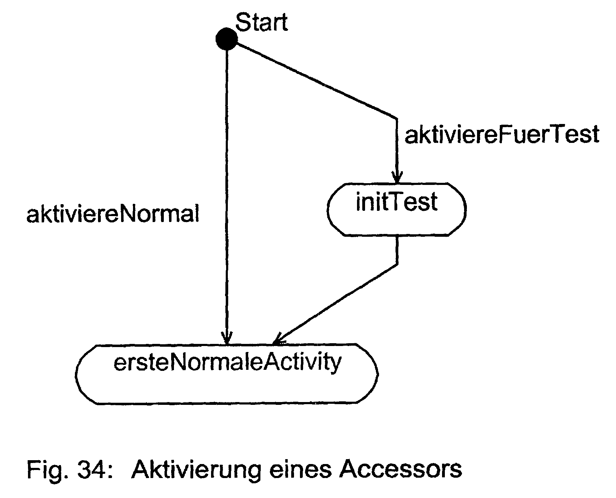

Fig. 34 zeigt ein Beispiel zur Aktivierung eines Accessors als erweitertes Activitydiagramm. In einem Activitymodell existert genau ein Startzustand. Ein Accessor, der neu angelegt wird, befindet sich automatisch im Startzustand. Er kann nach dem Anlegen initialisiert werden, indem ihm z.B. Parameter, die für seinen Betrieb erforderlich sind, von einem übergeordneten Accessor oder einem Accessorcontainer übergeben werden. Er verbleibt dabei im Startzustand. Der Startzustand eines Accessors hat eine ausgezeichnete Transition, die bei Aktivierung des Accessors abgearbeitet werden soll. Sie wird als Aktivierungstransition bezeichnet. Normalerweise wird dies die einzige vom Startzustand abgehende Transition sein. Gehen mehrere Transitionen vom Startzustand ab, so wird im Verhaltensmodell des Accessors eine der Transitionen als Aktivierungstransition gekennzeichnet, im Beispiel in Fig. 34 ist das die Transition "aktiviereNormal". Jeder Accessor muß in seiner Schnittstelle eine vordefinierte Methode zum Aktivieren vorsehen, mit der die Aktivierungstransition ausgelöst werden kann. Das Modellieren mehrerer vom Startzustand abgehender Transitionen ist sinnvoll, wenn Accessoren Testmodi unterstützen sollen. So kann in einem Accessorverhaltensmodell vorgesehen werden, daß der Accessor normalerweise von einer übergeordneten Instanz initialisiert und dann über die o.g. Schnittstellenmethode aktiviert wird, daß er sich alternativ aber auch zu Testzwecken selbst im Rahmen einer modellierten Activity initialisieren kann, um ohne externe Initialisierung innerhalb eines Testframeworks ablauffähig zu sein. Das Testframework würde in diesem Fall nicht die Aktivierungstransition auslösen, sondern eine parallele Transition, im Beispiel "aktiviereFuerTest", die zur Initialisierungsactivity "initTest" führt und anschließend wieder in den "normalen" Pfad mündet, im Beispiel also in der Activity "ersteNormaleActivity".

### Eintritt in einen Representer State

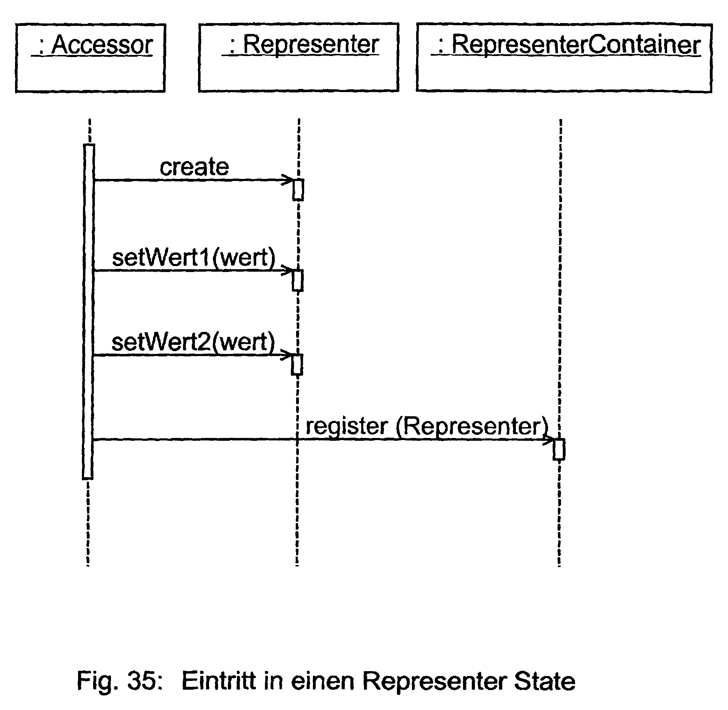

Bei Eintritt in einen Representer State läuft das in Fig. 35 als UML-Sequencediagramm dargestellte Protokoll ab. Bei Eintritt in den Representer State wird zunächst eine neue Instanz des dem Representer State im Verhaltensmodell zugeordneten Representertyps angelegt ("create"). Danach werden die Resourcemappings durchgeführt, die für den Representer State modelliert sind. Dabei werden typischerweise Werte vom Accessor an den Representer übergeben. Im Sequencediagramm ist dieser Vorgang durch die Aufrufe "setWert1()", "setWert2()" symbolisiert. Danach wird der Representer im Representercontainer registriert.

### Verlassen eines Representer States

Das Verlassen eines Representer States wird typischerweise vom Benutzer der Schnittstelle durch ein Input Event initiiert, das vom Representer entgegengenommen wird. Der Representer kann das Input Event unverändert oder mit zusätzlichen eigenen Parametern an den Accessor weiterschicken oder ein neues Event an den Accessor schicken. Der Accessor wird auf das vom Representer empfangene Event typischerweise mit einer vom Representer State abgehenden Transition reagieren. Dabei wird der Representer aus dem Representercontainer entfernt und damit deaktiviert. Anschließend werden die für die Transition modellierten Resourcemappings ausgeführt. Dabei werden typischerweise Werte von Parametern des vom Representer geschickten Events in Variablen des Accessors oder als Aufrufparameter in den Aufruf einer nachfolgenden Methode im Accessor übernommen.

### Eintritt in einen Embedded Accessor State ohne zugeordneten Representer

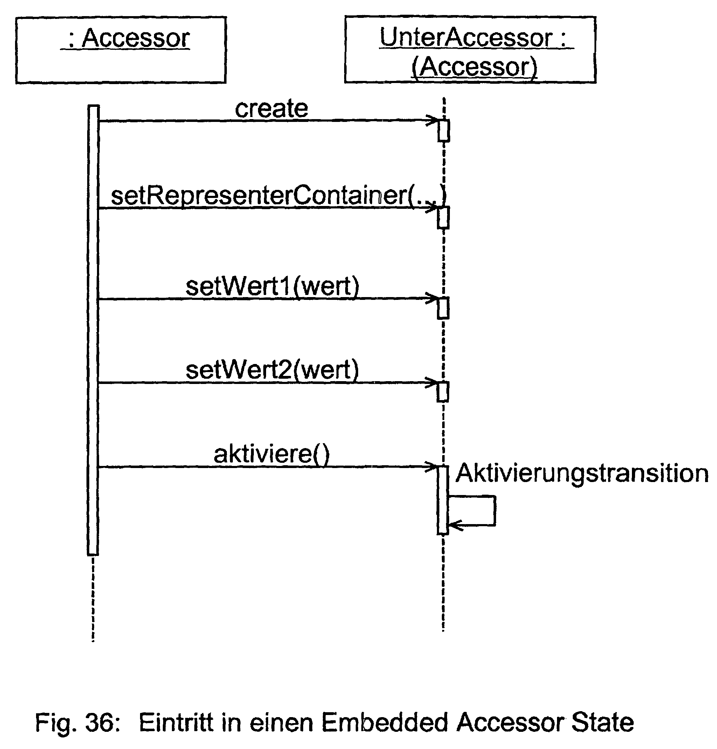

Bei Eintritt in einen Embeded Accessor State läuft das in Fig. 36 als UML-Sequencediagramm dargestellte Protokoll ab. Bei Eintritt in den Embedded Accessor State wird zunächst eine neue Instanz des dem Embedded Accessor State im Verhaltensmodell zugeordneten Accessortyps als Unteraccessor angelegt ("create"). Danach werden die Resourcemappings durchgeführt, die für den Embedded Accessor State modelliert sind. Dabei werden typischerweise Werte vom Accessor an den Unteraccessor übergeben. Im Sequencediagramm ist dieser Vorgang durch die Aufrufe "setWert1()", "setWert2()" symbolisiert. Danach wird der Unteraccessor aktiviert, wie weiter oben unter "Aktivierung eines Accessors" beschrieben.

### Verlassen eines Embedded Accessor States

Das Verlassen eines Embedded Accessor States wird typischerweise durch eine Transition im Unteraccessor ausgelöst, die den Unteraccessor zu einem Endzustand geführt hat. Der Unteraccessor erzeugt daraufhin ein Terminal State Event, das an den Accessor geschickt wird und eine beliebige Menge von Parametern enthalten kann. Der Accessor wird auf das vom Unteraccessor empfangene Event typischerweise mit einer vom Embedded Accessor State abgehenden Transition reagieren. Dabei wird der Unteraccessor deaktiviert. Anschließend werden die für die Transition modellierten Resourcemappings ausgeführt. Dabei werden typischerweise Werte von Parametern des vom Unteraccessor geschickten Events in Variablen des Accessors oder als Aufrufparameter in den Aufruf einer nachfolgenden Methode im Accessor übernommen.

### Eintritt in einen Embedded Accessor State mit eigenem Representer

Ein Embedded Accessor State kann neben dem Unteraccessor auch einen Representer haben. Beim Eintritt in einen Embedded Accessor State mit eigenem Representer wird zunächst der eingebettete Accessor angelegt, wie oben unter "Eintritt in einen Embedded Accessor State ohne zugeordneten Representer" beschrieben. Bevor der Unteraccessor aktiviert wird, wird jedoch noch der Representer angelegt und beim Representercontainer registriert, wie oben unter "Eintritt in einen Representer State" beschrieben.

### Verlassen eines Embedded Accessor States durch Ereignis im eigenen Representer

Es wurde oben unter "Verlassen eines Embedded Accessor States" beschrieben, wie ein Embedded Accessor State dadurch verlassen werden kann, daß der Unteraccessor einen Endzustand erreicht. Wenn der Accessor im Embedded Accessor State einen eigenen Representer besitzt, kann er auch durch ein Event verlassen werden, das vom eigenen Representer stammt Das geschieht, wenn der Representer infolge einer Benutzereingabe ein Input Event an den Accessor schickt, während der Unteraccessor noch aktiv ist. Der Accessor wird auf das vom Representer empfangene Event typischerweise mit einer vom Embedded Accessor State abgehenden Transition reagieren. Dabei wird der Representer aus dem Representercontainer entfernt und damit deaktiviert. Soweit entspricht der Ablauf dem weiter oben beschriebenen Ablauf beim "Verlassen eines Representer States". Da der Unteraccessor noch aktiv ist, muß nun noch eine explizite Deaktivierung des Unteraccessors erfolgen. Accessoren stellen zum Deaktivieren eine Schnittstellenmethode bereit. Nach der Deaktivierung werden die für die Transition modellierten Resourcemappings durch den Accessor ausgeführt. Dabei werden typischerweise Werte von Parametern des vom Representer geschickten Events in Variablen des Accessors oder als Aufrufparameter in den Aufruf einer nachfolgenden Methode im Accessor übernommen

### Eintritt in einen Endzustand

Beim Eintritt in einen Endzustand verschickt der Accessor ein Terminal State Event. Er kann dem Event Parameter hinzufügen. Das Event wird von einem übergeordneten Accessor empfangen. Der Vorgang ist aus Sicht des übergeordneten Accessors unter "Verlassen eines Embedded Accessor State" beschrieben. Existiert kein übergeordneter Accessor, so wird das Event vom Accessorcontainer, der den Accessor enthält, bearbeitet.

### Eintritt in einen Jump State

Beim Eintritt in einen Jump State wird vom Accessor zunächst eine neue Instanz des dem Jump State im Verhaltensmodell zugeordneten Typs als Folgeaccessor angelegt. Danach werden die Resourcemappings durchgeführt, die für den Jump State modelliert sind. Dabei werden typischerweise Werte vom Accessor an den Folgeaccessor übergeben. Danach verschickt der Accessor ein Jump State Event, das den Folgeaccessor als Parameter enthält. Dieses Event kann als Sprungwunsch verstanden werden. Das Event wird von einem übergeordneten Accessor empfangen, der entscheidet, ob er den Sprungwunsch weiterleiten, selbst ausführen oder abfangen will.
■ Für das Weiterleiten des Sprungwunsches muß der übergeordnete Accessor keine speziellen Maßnahmen ergreifen. Das Event wird einfach dem wiederum übergeordneten Accessor übergeben. Durch Weiterleiten des Sprungwunsches wird der weiterleitende Accessor automatisch deaktiviert und verworfen.
■ Um den Sprung selbst auszuführen, wird der übergeordnete Accessor auf den Sprungwunsch mit einer Transition reagieren, die zu einem Embedded Accessor State führt, der den fertig konfigurierten Folgeaccessor aus dem Event übernimmt und einbindet.
■ Um den Sprungwunsch abzufangen, wird der übergeordnete Accessor auf den Sprungwunsch mit einer Transition reagieren, die zu einem beliebigen anderen Zustand führt.

Ist der Accessor, der das Jump State Event auslöst, direkt im Accessorcontainer enthalten, so wird der Accessorcontainer den Sprungwunsch ausführen, indem der im Jump State Event enthaltene Folgeaccessor als neuer Hauptaccessor im Accessorcontainer registriert und aktiviert wird. Der auslösende Accessor wird verworfen.

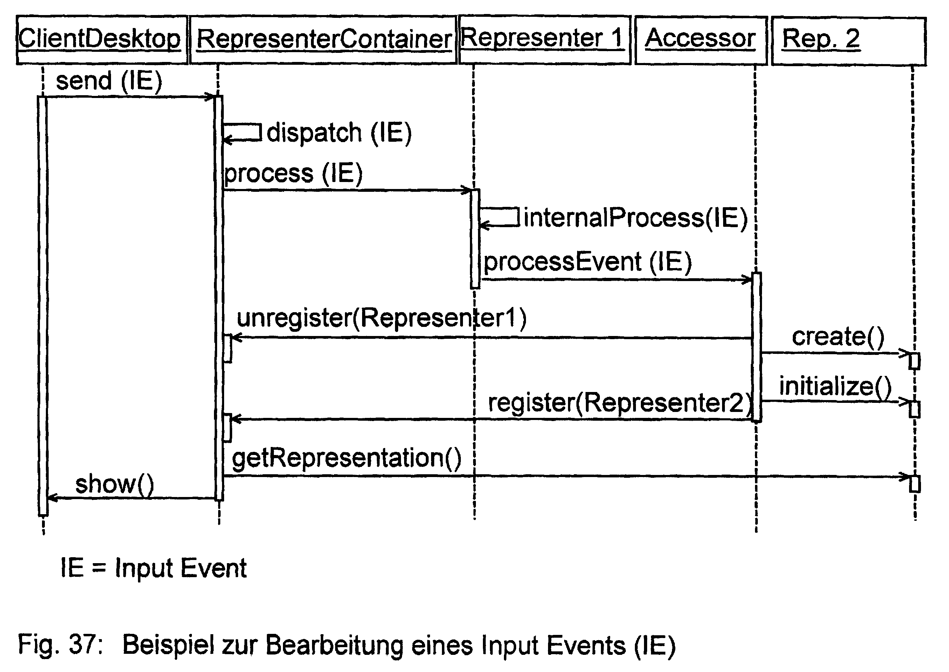

Fig. 37 zeigt an einem Beispiel, wie die Bearbeitung eines Input Events durch Representer und Accessor erfolgt. Der Accessor befinde sich in einem Representer State 1 und der zugeordnete Representer 1 sei im Representercontainer registriert. Seine Repräsentation sei auf dem Bildschirm des Benutzers (Clientdesktop) sichtbar. Der Benutzer nimmt eine Eingabe vor und löst damit ein Input Event (IE) aus, das vom Clientdesktop an den obersten Representercontainer geschickt wird, der das Ereignis an den Representer 1 zur Verarbeitung weiterleitet. Representer 1 nimmt eine interne Verarbeitung des Ereignisses vor und schickt es schließlich an den Accessor weiter. Damit ist die Verarbeitung des Input Events für den Representer 1 abgeschlossen. Im Accessor löst das Ereignis eine Transition aus, die vom Representer State 1 zu einem Representer State 2 führt. Beim Verlassen des Representer State 1 wird der Representer 1 aus dem Representercontainer entfernt und verworfen. Beim Eintritt in den Representer State 2 wird zunächst der neue Representer angelegt (create) und alle erforderlichen Resourcemappings werden durchgeführt (initialize). Representer 2 wird dann beim Representercontainer registriert. Damit ist die Verarbeitung des Input Events für den Accessor abgeschlossen und die Kontrolle geht wieder auf den Representercontainer über, der die neue Präsentation für den Clientdesktop vom registrierten Representer 2 erfragt (getRepresentation) und dem Clientdesktop schickt (show). Bei der Erstellung der Repräsentation kann Representer 2 auf andere Objekte zugreifen, um die aktuellen Werte zur Anzeige von Element Representer Items zu ermitteln (ohne Darstellung in Fig. 37).

### Entwicklungsprozeß zur Entwicklung und Bereitstellung von externen Schnittstellen

Der Entwicklungsprozeß beschreibt, wie externe Schnittstellen für Softwaresysteme unter Nutzung der oben beschriebenen Abstraktionen des Metamodells erstellt werden können.

Der Hauptzweig des Entwicklungsprozesses beschreibt die Erstellung einer externen Schnittstelle für eine gegebene Accessorlaufzeitumgebung, für die bereits eine Technologieabbildung einschließlich Implementierungscartridge mit Templates zur Codegenerierung und Eigenschaftsmatrix zur Modellverifikation definiert ist.

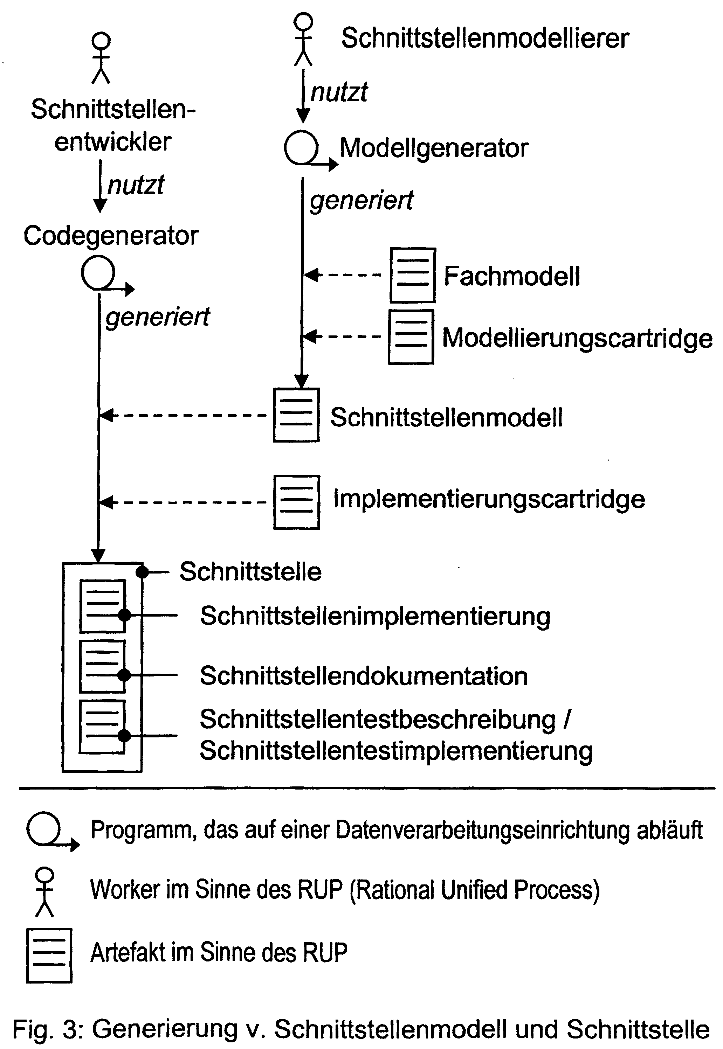

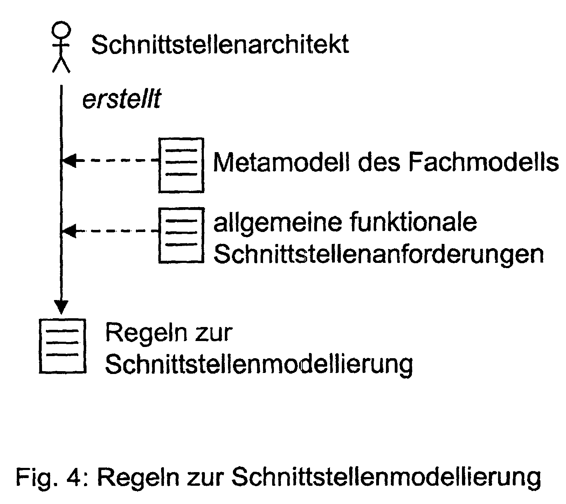

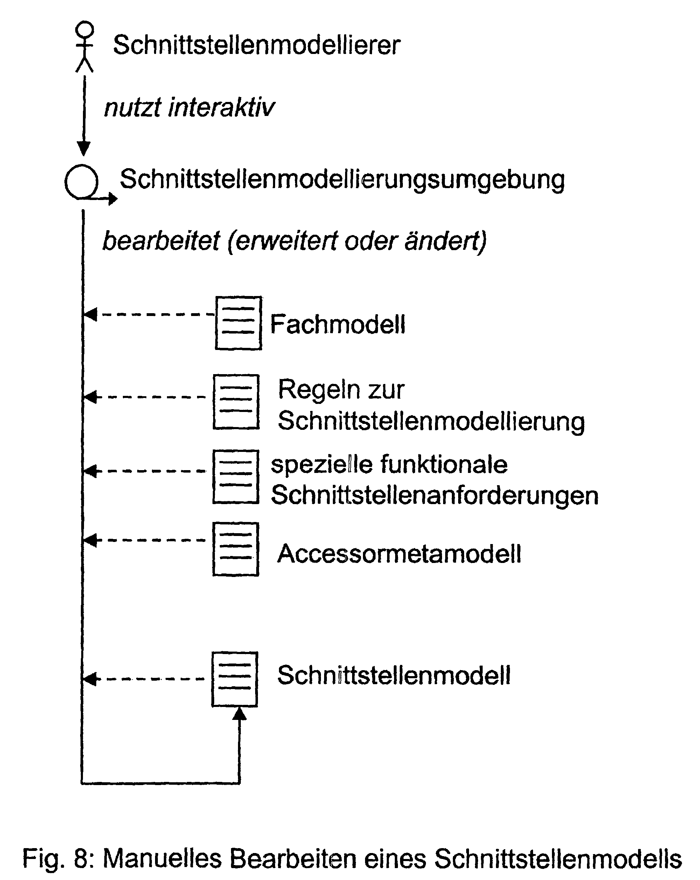

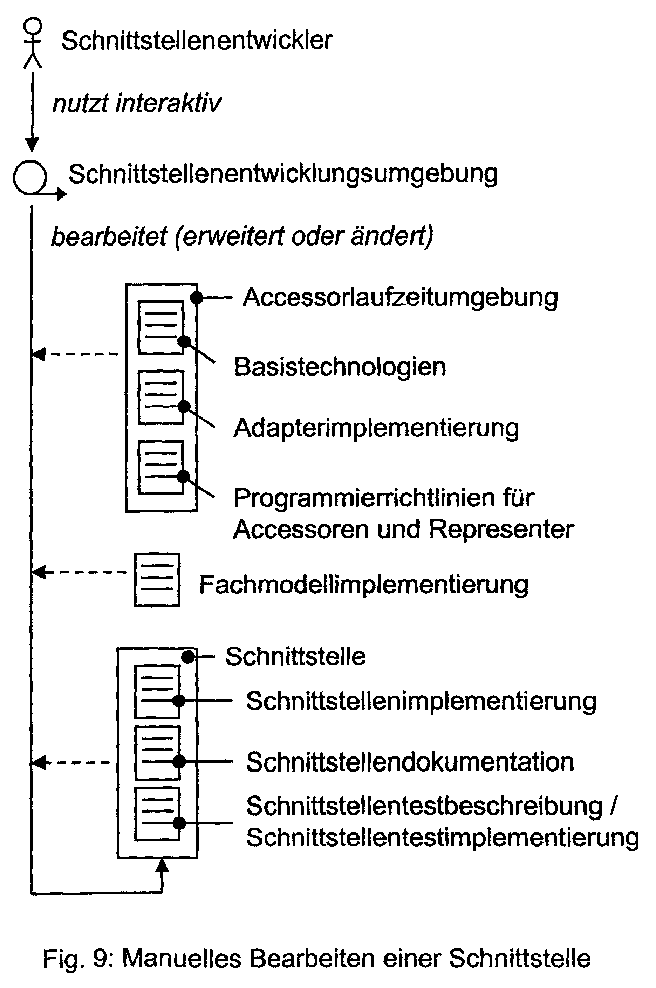

Tätigkeiten in diesem Prozeß sind:
1. Automatisches Erstellen eines Schnittstellenmodells, wie in Fig. 3 dargestellt. Ein Schnittstellenmodellierer nutzt einen Modellgenerator, der auf einer Datenverarbeitungseinrichtung abläuft, um aus einem vorhandenen UML-Modell (Fachmodell) ein Schnittstellenmodell automatisch zu erstellen. Der Modellgenerator wendet die Regeln einer gegebenen Modellierungscartridge auf das Fachmodell an und nutzt zur Erstellung des Schnittstellenmodells eine Implementierung des Accessormetamodells.
2. Manuelles Bearbeiten eines Schnittstellenmodells, wie in Fig. 8 dargestellt.
   Ein Schnittstellenmodellierer macht Eingaben in eine Schnittstellenmodellierungsumgebung, die auf einer Datenverarbeitungseinrichtung abläuft und die eine Implementierung des Accessormetamodells nutzt, um die Modellinformationen eines Schnittstellenmodells zu speichern und zu manipulieren. Ein Beispiel für ein Modellierungswerkzeug, das zur Schnittstellenmodellierung verwendet werden kann, ist das CASE-Tool (Computer Aided Software Engineering) Rational Rose von der Firma Rational Software.
   Der Schnittstellenmodellierer nutzt ein im Rahmen eines Schnittstellenentwicklungsprojekts vorgegebenes Fachmodell, vorgegebene Regeln zur Schnittstellenmodellierung - verfaßt von einem Schnittstellenarchitekten, wie in Fig. 4 dargestellt -, vorgegebene funktionale Schnittstellenanforderungen und das Accessormetamodell. Der Schnittstellenmodellierer kann vorhandene Elemente des Schnittstellenmodells, die automatisch durch Modellgenerierung oder manuell erstellt wurden, wiederverwenden.
3. Verifikation des Schnittstellenmodells mit Hilfe eines Verifikationsprogramms.
   Ein Schnittstellenentwickler oder Schnittstellenmodellierer nutzt ein Verifikationsprogramm, das Teil der Schnittstellenmodellierungsumgebung ist, um zu prüfen, ob ein Schnittstellenmodell Eigenschaften aufweist, die nicht auf eine gewählte Accessorlaufzeitumgebung abbildbar sind. Das Verifikationsprogramm wertet dazu die in einer Eigenschaftsmatrix beschriebenen Eigenschaften der gewählten Accessorlaufzeitumgebung aus.
4. Automatisches Erstellen der Schnittstelle, wie in Fig. 3 dargestellt.
   Ein Schnittstellenentwickler nutzt einen Codegenerator, der auf einer Datenverarbeitungseinrichtung abläuft, um aus dem Schnittstellenmodell die Schnittstelle automatisch zu erstellen. Der Modellgenerator wendet die Abbildungsvorschriften einer für eine gewählte Accessorlaufzeitumgebung gegebenen Implementierungscartridge auf das Schnittstellenmodell an und erstellt alle für die Implementierung der modellierten Schnittstelle erforderlichen Artefakte.
   Optional ist eine automatische Generierung von Artefakten für den Anwender der Schnittstelle möglich, insbesondere die Generierung einer lesbaren oder durch eine Maschine interpretierbaren Schnittstellenbeschreibung.
   Eine weitere Option ist die Generierung von Schnittstellentestbeschreibungen und/oder Schnittstellentestimplementierungen für automatisierte Schnittstellentests.
5. Manuelles Bearbeiten der Schnittstelle, wie in Fig. 9 dargestellt.
   Ein Schnittstellenentwickler macht Eingaben in eine Schnittstellenentwicklungsumgebung, die auf einer Datenverarbeitungseinrichtung abläuft, um die Schnittstellenartefakte zu bearbeiten. Ein Beispiel ist die ergonomische Ausgestaltung einer Maske einer grafischen Benutzerschnittstelle durch Bearbeitung des für einen Representer generierten Quelltextes.
6. Durchführung von automatischen Übersetzungsschritten für Quelltexte, wo nötig.
   Erstellen der Auslieferungseinheit(en) für die Schnittstelle und Installation der Auslieferungseinheit(en) in einer Testumgebung.
7. Ausführung von Schnittstellentests und ggf. Behebung von Fehlem.
8. Auslieferung/Installation der externen Schnittstelle im Produktionssystem.

Diese Abfolge von Entwicklungsschritten kann in mehreren Iterationen mehrmals vollständig oder in Teilen wiederholt werden. Damit macht das Verfahren die allgemeinen anerkannten Vorzüge iterativer Entwicklung auch für die Schnittstellenentwicklung nutzbar.

### Entwicklungsprozeß zur Entwicklung und Bereitstellung neuer Accessorlaufzeitumgebungen

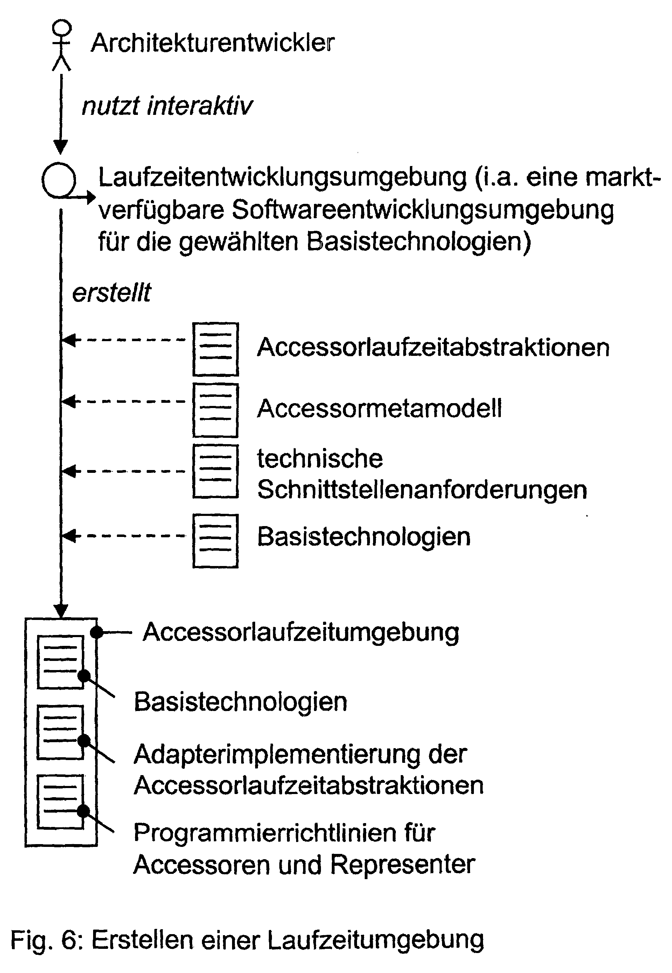

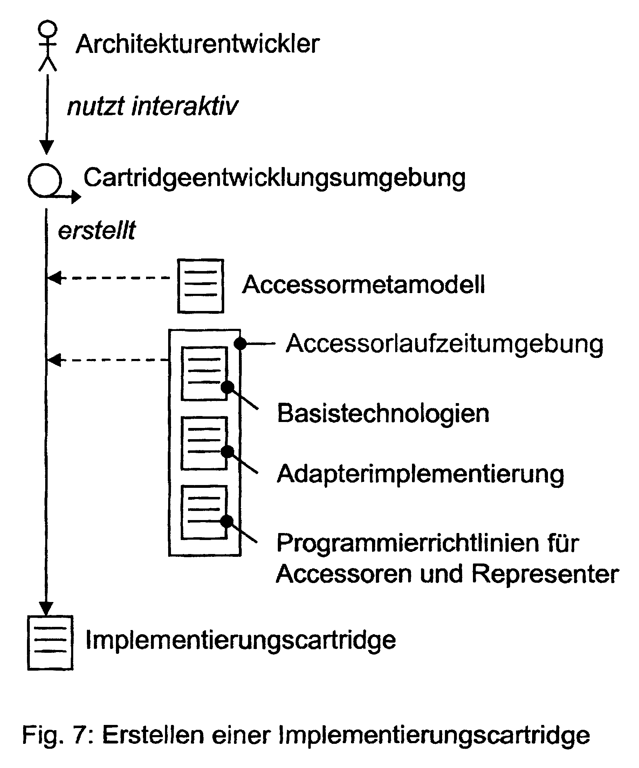

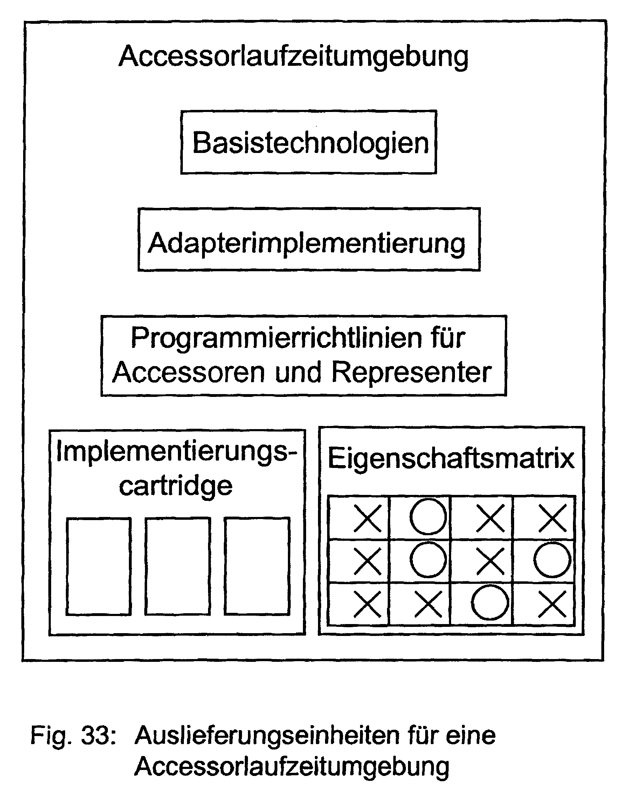

Neben dem Entwicklungsprozeß zur Erstellung der externen Schnittstellen gibt es einen unabhängigen Prozeß zur Erstellung einer neuen Accessorlaufzeitumgebung. Die Entwicklungsschritte sind:
1. Auswahl von Basistechnologien.
   Ein Schnittstellenarchitekt trifft eine Auswahl von Basistechnologien, auf denen die Implementierung der Accessorlaufzeitumgebung erfolgen soll. So kann z.B. Java als Basistechnologie für eine Accessorlaufzeitumgebung für Benutzerschnittstellen in Form Swing-basierter Java-Anwendungen ausgewählt werden.
2. Entwurf und Implementierung einer Accessorlaufzeitumgebung, wie in Fig. 6 dargestellt.
   Ein Architekturentwickler verwendet eine Laufzeitentwicklungsumgebung, die auf einer Datenverarbeitungseinrichtung abläuft, um eine Accessorlaufzeitumgebung zu implementieren. Er verwendet dabei die vorgegebenen Accessorlaufzeitabstraktionen und das Accessormetamodell, um auf der Basis der zuvor gewählten Basistechnologien eine Adapterschicht zu entwerfen und zu implementieren.
   Er berücksichtigt ggf. auch technische Schnittstellenanforderungen, die im Rahmen eines Schnittstellenentwicklungsprojekts definiert worden sind. Die Adapterschicht definiert konkrete Protokolle als Implementierung für die abstrakten Protokolle zwischen Accessor, Representer, Accessorcontainer und Representercontainer. Sie definiert auch die konkreten Schnittstellen, die die Komponenten für die konkreten Protokolle bereitstellen müssen. Implementierungen für Accessorcontainer, Representercontainer und alle weiteren notwendigen Komponenten, die später von generierten Accessoren und Representern genutzt werden sollen, werden als Teil der Adapterschicht erstellt.
   Der Architekturentwickler erstellt die Dokumentation für die Laufzeitumgebung. Dazu gehören die Dokumentation öffentlicher Schnittstellen der Laufzeitumgebung, die Programmierrichtlinien für die Accessor- und Representerentwicklung, insbesondere die Beschreibung der Dienste der Laufzeitumgebung und ihrer korrekten Nutzung, sowie die Eigenschaftsmatrix, die die für die Verifikation von Schnittstellenmodellen relevanten Eigenschaften der Laufzeitumgebung beschreibt.
3. Entwicklung einer Implementierungscartridge, wie in Fig. 7 dargestellt.
   Ein Architekturentwickler nutzt eine Cartridgeentwicklungsumgebung, die auf einer Datenverarbeitungseinrichtung abläuft, zur Entwicklung einer Implementierungscartridge für die Accessorlaufzeitumgebung, die die Generierung aller für diese Laufzeitumgebung notwendigen Artefakte durch Anwendung im Codegenerator ermöglicht. Er berücksichtigt dabei alle Bestandteile der Accessorlaufzeitumgebung, die in den Schritten 1 und 2 erstellt wurden - also alle in Fig. 33 dargestellten Bestandteile mit Ausnahme der Implementierungscartridge, die er ja gerade erstellt - sowie das Accessormetamodell. Bei der Erstellung einer neuen Implementierungscartridge können in vielen Fällen große Teile bestehender Implementierungscartridges wiederverwendet werden, da der Zugriff auf Modellinformationen eines Schnittstellenmodells über die Implementierung des Accessormetamodells in allen Cartridges auf die gleiche Weise erfolgt und auch die Struktur der zu erzeugenden Implementierungen sich häufig stark ähnelt. In Fällen, in denen zwei Accessorlaufzeitumgebungen nicht zu stark voneinander abweichen, können die zu generierenden Quelltexte mit geringem Aufwand so strukturiert werden, daß eine generierte Accessorimplementierung - die Implementierung der Accessorklasse samt Zustandsautomat, der das Verhaltensmodell abbildet, sowie der manuell erstellte Code für Activities, Decisions und manuell modellierte Methoden - für beide Laufzeitumgebungen gleich aussieht und in mehreren externen Schnittstellen unverändert verwendet werden kann.

Eine auf diese Weise erstellte Accessorlaufzeitumgebung kann als wiederverwendbare Einheit in vielen Schnittstellenentwicklungsprojekten verwendet werden.

### Durchgängiges Anwendungsbeispiel

Als durchgängiges Beispiel zur Veranschaulichung des beschriebenen Verfahrens dient ein fiktives "Warenbestellsystem" als Softwaresystem, für das externe Schnittstellen entwickelt werden sollen, und zwar
- eine Benutzerschnittstelle zum Erstellen einer neuen Bestellung
- eine Systemschnittstelle zum Erstellen einer neuen Bestellung

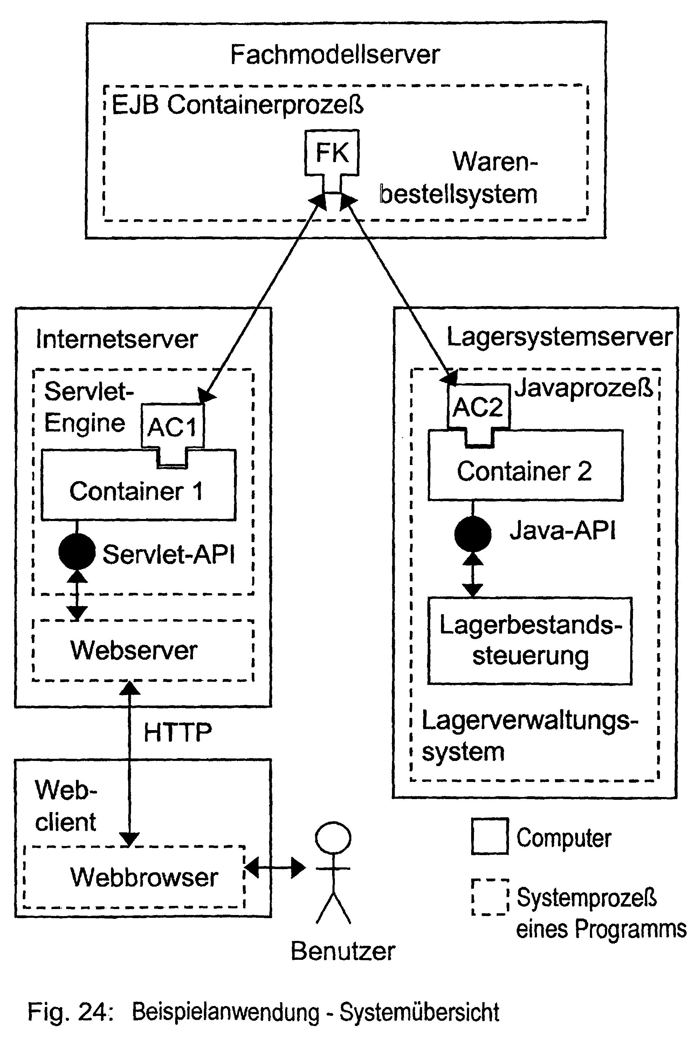

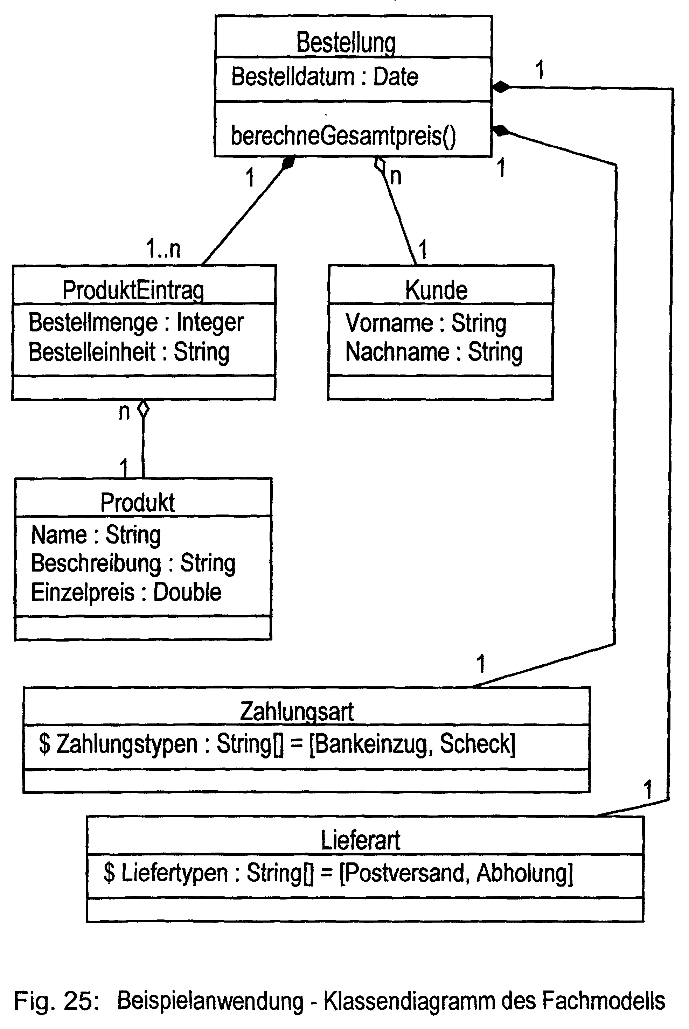

Fig. 24 zeigt eine schematische Darstellung für die Verteilung des fertigen Warenbestellsystems. Das Fachmodell der Anwendung, das in Fig. 25 wiedergegeben ist, sei in Form von EJB-Komponenten implementiert worden, die nun in einem EJB-Container auf einem Fachmodellserver betrieben werden. Exemplarisch ist in Fig. 24 die Fachkomponente FK dargestellt.

Aus dem Schnittstellenmodell, das in Fig. 26 bis Fig. 28 dargestellt ist, wurden durch unterschiedliche Technologieprojektionen zwei Implementierungen des Bestellaccessors und der von ihm verwendeten Elemente für unterschiedliche Accessorlaufzeitumgebungen abgeleitet. Der in Fig. 24 dargestellte Accessor AC1 wird als Benutzerschnittstelle innerhalb des Prozesses einer Servlet-Engine nach der SUN Microsystem J2EE-Spezifikation (Java 2 Platform, Enterprise Edition) betrieben. Die Servlet-Engine bearbeitet im Auftrag eines Webservers HTTP (Hypertext Transfer Protocol)-Anfragen eines Benutzers, der den Webserver mit Hilfe eines Webbrowsers anspricht. Container 1 ist die servlet-basierte Implementierung eines Accessorsontainers für Accessor AC1 und stellt auch den obersten Representercontainer bereit. AC1 benutzt diesen Representercontainer, um seine jeweiligen Representer zu registrieren. Der Accessor AC1 nutzt ferner die Home- und Remoteinterfaces der EJB-Fachkomponente FK.

Durch eine zweite Technologieprojektion wurde der Bestellaccessor aus dem o.g. Schnittstellenmodell auch auf eine Pure-Java-basierte Laufzeitumgebung für Systemschnittstellen abgebildet. Die resultierende Schnittstellenkomponente AC2 wird durch die Lagerbestandssteuerung eines Lagerverwaltungssystems verwendet, das auf dem Rechner Lagersystemserver abläuft. Die Lagerbestandssteuerung soll bei Unterschreiten von Lagermindestbeständen Waren automatisch nachbestellen. AC2 nimmt als Systemschnittstelle die gleichen Aufgaben wahr wie AC1 als Benutzerschnittstelle und auch AC2 nutzt die EJB-Home- und Remote-Interfaces zum Zugriff auf die Fachkomponente FK. Lediglich die von den Accessoren verwendeten Representerimplementierungen unterscheiden sich. AC1 registriert in Container 1 Representer, die als Darstellung eine HTML-Seite erstellen können. AC2 registriert in Container 2 Representer, die Implementierungen von Java-Schnittstellen darstellen.

### Fachmodell

Zunächst enthält das Anwendungsmodell des zu entwickelnden Warenbestellsystems nur die Klassen des Fachmodells. Sie sind in Fig. 24 dargestellt. Die Implementierung dieses Fachmodells bildet den funktionalen Kern der Beispielanwendung. Die Implementierung sei durch einen Codegenerator für Fachmodelle aus dem Modell erfolgt. Diese Technologieabbildung wird als Fachprojektion bezeichnet.

Inhaltlich beschreibt das Modell eine Bestellung eines Kunden. Die Bestellung enthält eine Menge von Produkteinträgen, die sich jeweils auf ein Produkt beziehen. In einer Bestellung muß mindestens ein Produkteintrag vorhanden sein. Die Bestellung enthält femer eine Angabe über die gewünschte Zahlungsart und die gewünschte Lieferart des Kunden für diese Bestellung. Die Bestellung kann zu jedem Zeitpunkt den Gesamtpreis berechnen, der sich aus Bestellmengen aller Produkteinträge und den jeweiligen Einzelpreisen der Produkte ergibt.

Es sollen für diesen funktionalen Kern nun die zwei externen Schnittstellen realisiert werden, die die Durchführung einer Bestellung ermöglichen. Die erste Schnittstelle ist eine Benutzerschnittstelle, mit der ein Endkunde eine Bestellung über das Internet tätigen kann. Die zweite Schnittstelle soll eine Systemschnittstelle sein, über die das Lagerverwaltungssystem automatisch Bestellungen tätigen kann. Sie soll als Java-API realisiert werden.

### Erstellen des Schnittstellenmodells

Die gewünschte Schnittstelle wird mit Hilfe des Accessormetamodells in einem Schnittstellenmodell beschrieben, das in den Figuren Fig. 26 bis Fig. 28 wiedergegeben ist. Für einige Teile des Modells wird eine grafische Notation verwendet, die auf der zugrundeliegenden UML-Notation aufbaut. So werden Accessoren und Representer in Fig. 26 durch eigene Klassensymbole repräsentiert. Für Jump State, Embedded Accessor State und Representer State werden spezielle Zustandssymbole verwendet.

Manche Teile des Modells, wie z.B. die Details eines Representer States oder eines Embedded Accessor States, werden weiter unten stichwortartig beschrieben. In einer Schnittstellenmodellierungsumgebung stehen für diese Detailinformationen spezielle Modellierungshilfen in Form von Eingabedialogen zur Verfügung.

### Klassen im Schnittstellenmodell

Zunächst werden im Anwendungsmodell die Accessoren und Representer entworfen, die für die Benutzerschnittstelle benötigt werden. Fig. 26 zeigt das entsprechende Klassendiagramm, wobei Pfeile Nutzungsbeziehungen symbolisieren.

Die wichtigste Klasse ist der Bestellaccessor. Der Bestellaccessor ermöglicht dem Kunden, eine neue Bestellung anzulegen und zu bearbeiten (nutzt Bestellrepresenter). Der Kunde kann ein Produkt aus dem Warenbestand auswählen (Einbindung Produktauswahlaccessor) und der Bestellung als Produkteintrag hinzufügen, wenn noch kein Eintrag für das entsprechende Produkt existiert. Anderenfalls wird ein entsprechender Hinweis ausgegeben (nutzt Meldungsrepresenter). Der Kunde kann zu jedem Produkteintrag die gewünschte Bestellmenge angeben. Produkteinträge können wieder aus der Bestellung entfernt werden. Zu jedem Produkteintrag in der Bestellung kann eine ausführliche Produktbeschreibung (nutzt "Produktdetailrepresenter") separat angezeigt werden. Der Kunde kann die Lieferart und die Zahlungsart wählen. Der Kunde kann die Bestellung verwerfen oder ausführen und erhält im zweiten Fall eine Bestätigung (nutzt "Meldungsrepresenter").

Der Produktauswahlaccessor ist ein Standardauswahlaccessor für den Fachtyp Produkt. Standardauswahlaccessor bedeutet, daß das Modell dieses Accessors und der von ihm genutzten Representer Produktdetailrepresenter und Produktselectorrepresenter automatisch durch den Modellgenerator erstellt wurde, der die Regeln einer vordefinierter Modellierungscartridge auf das Fachmodellelement Produkt angewendet hat. Der Produktdetailrepresenter zeigt alle verfügbaren Informationen über das Produkt an. Der Produktselectorrepresenter zeigt eine Liste von Produkten an und ermöglicht eine Auswahl. Das Verhalten des Produktauswahlaccessors, das im Activitymodell in Fig. 27 dargestellt ist, wurde so generiert, daß der Benutzer zunächst die Liste der Produkte gezeigt bekommt. Er kann aus der Liste ein Produkt wählen und sich entweder Details zum gewählten Produkt anzeigen lassen (und von den Details natürlich auch wieder zur Liste wechseln) oder seine Auswahl bestätigen, so daß das gewählte Produkt vom übergeordneten Accessor übernommen werden kann. Will der Benutzer keines der Produkte wählen, so kann er die Auswahl abbrechen und kehrt ohne Auswahl zum übergeordneten Accessor zurück.

Der Bestellrepresenter zeigt alle erforderlichen Daten einer Bestellung an und bietet dem Benutzer Eingabeelemente, um die verschiedenen im Bestellaccessor beschriebenen Aktionen durchführen zu können, z.B. Löschen eines Eintrags, Ändern der Bestellmenge, Ausführen der Bestellung.

Der Meldungsrepresenter ist ein Hilfsrepresenter, der zur Ausgabe jeder Art von Benutzermeldungen verwendet werden kann. Er zeigt den Meldungstext an und bietet ein einzelnes Trigger Item "Ok", mit dem der Benutzer die Meldung bestätigen und fortfahren kann.

### Verhaltensbeschreibung des Bestellaccessors

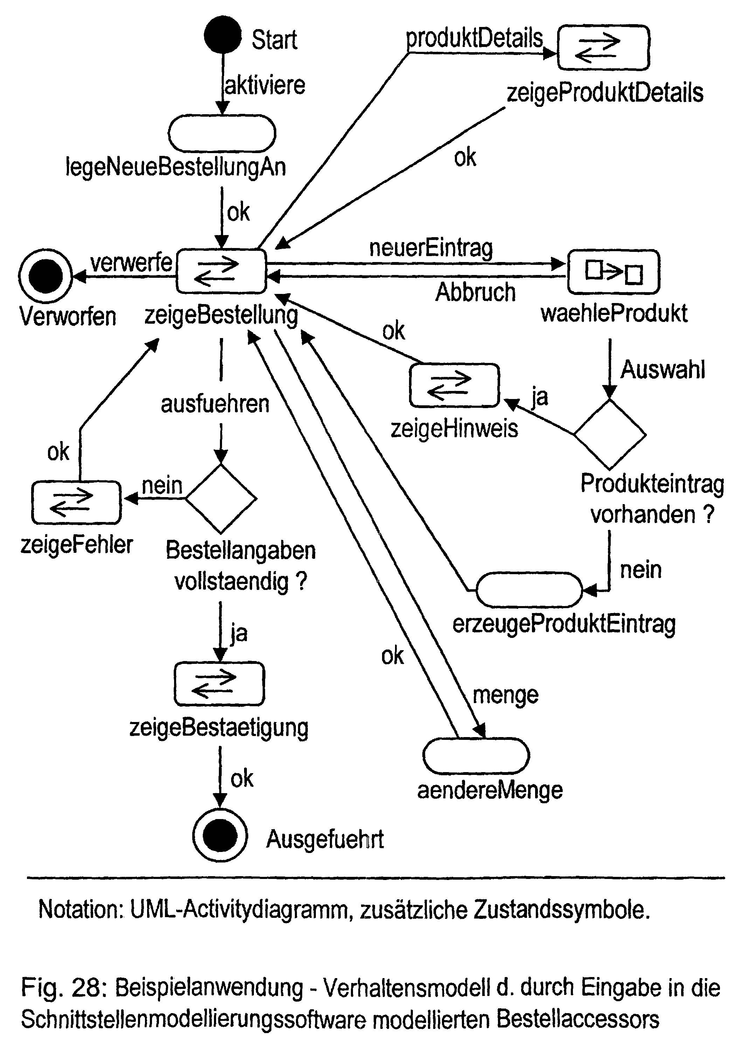

Die Verhaltensbeschreibung des Bestellaccessors erfolgt mit Hilfe des erweiterten Activitymetamodells, das Bestandteil des Accessormetamodells ist. Fig. 28 zeigt das Verhaltensmodell des Bestellaccessors. Die weiter oben beschriebene Funktionalität zur Auswahl einer Zahlungsart und einer Lieferart ist hier nicht modelliert, um das Beispiel zu vereinfachen. Diese Funktionen werden auch im weiteren Verlauf nicht mehr betrachtet.

Ein neu angelegter Bestellaccessor befindet sich zunächst im Startzustand "Start". Er wird bei Bedarf vom Accessorcontainer oder einem übergeordneten Accessor aktiviert, so daß die Transition "aktiviere" erfolgt, und führt dann die Activity "legeNeueBestellungAn" durch, indem er eine neue Instanz vom Fachtyp "Bestellung" anlegt und in der Instanzvariablen "aktuelleBestellung" des Bestellaccessors ablegt. Damit ist eine initiale Verbindung zum Fachmodell hergestellt und es erfolgt automatisch die Transition "ok" zum Representer State "zeigeBestellung", der im Mittelpunkt dieses Modells steht.

Bei Eintritt in den Representer State wird ein Representer vom Typ "BestellRepresenter" neu angelegt, mit dem Wert aus "aktuelleBestellung" initialisiert und im globalen Representercontainer registriert. Der Benutzer sieht die Darstellung des Representers auf dem Bildschirm (im Beispiel also in seinem Webbrowser). Alle weiteren Transitionen können durch Eingabeelemente des Bestellrepresenters ausgelöst werden.

Um die Abläufe zu verdeutlichen, wird im folgenden der Ablauf zum Hinzufügen eines neuen Produkteintrags beschrieben.

Über ein Trigger Item im Modell des Bestellrepresenters kann ein Input Event ausgelöst werden, das eine Transition zum Embedded Accessor State "waehleProdukt" bewirkt. Bei Eintritt in den Embedded Accessor State wird ein neuer Accessor vom Typ Produktauswahlaccessor angelegt, mit der Menge aller Produkte der Firma (im Beispiel-Fachmodell nicht dargestellt) initialisiert und schließlich aktiviert. Über die Funktionsweise des Produktauswahlaccessor ist dem Bestellaccessor nichts bekannt außer den beiden möglichen Endzuständen "Auswahl" und "Abbruch", die Terminal State Events auslösen können, auf die der Bestellaccessor reagieren will.

Erreicht der eingebettete Accessor den Endzustand "Abbruch", so ist keine weitere Aktion erforderlich und der Bestellaccessor führt die zugehörige Transition "Abbruch" zurück zu "zeigeBestellung" aus.

Wird jedoch der Endzustand "Auswahl" erreicht, so übernimmt der Bestellaccessor im Rahmen eines Resourcemappings, das als Teil der Transition modelliert wurde, den Wert der öffentlichen Variablen "selektiertesProdukt" aus dem Produktauswahlaccessor und führt die UML Decision "Produkteintrag vorhanden?" aus, die überprüft, ob es in der Bestellung bereits einen Produkteintrag für "selektiertesProdukt" gibt. In diesem Fall wird durch ein Processing Event "ja" die entsprechende Transition in den Representer State "zeigeHinweis" ausgelöst, und der Benutzer bekommt durch einen Meldungsrepresenter eine entsprechende Meldung angezeigt, die er über das Trigger Item "weiter" (dadurch Input Event "ok") bestätigen kann. Die zugehörige Transition "ok" führt wiederum zum Representer State "zeigeBestellung".

Gibt es noch keinen Produkteintrag für das gewählte Produkt, so wird von der Decision das Processing Event "nein" ausgelöst, das zur Activity "erzeugeProdukteintrag" führt. In der Activity wird dem Fachobjekt Bestellung, zu finden in der Variablen "aktuelleBestellung" des Accessors, ein neues Fachobjekt vom Typ Produkteintrag hinzugefügt, dem das bezogene Produkt übergeben wird. Ein Processing Event "ok" am Ende der Activity löst die gleichnamige Transition zum Representer State "zeigeBestellung" aus, dessen Bestellrepresenter dem Benutzer nun auch den neu angelegten Produkteintrag anzeigt.

### Verhaltensbeschreibung des Produktauswahlaccessors

Der Produktauswahlaccessor ermöglicht dem Benutzer die Auswahl eines Produktes aus einer Liste von Produkten nach dem Verhaltensmodell, das in Fig. 27 dargestellt ist.

Im Representer State "zeigeProduktListe" wird die Menge aller Produkte mit Hilfe eines "Produktselectorrepresenters" angezeigt.

Der Benutzer kann ein Produkt wählen und die Auswahl bestätigen. Das Trigger Item "ok" triggert dabei das Input Event "waehleProdukt", das den gleichnamigen Statusübergang auslöst. Im Rahmen der Transition wird ein Resourcemapping durchgeführt, und das gewählte Produkt wird in der Instanzvariablen "selektiertesProdukt" des Produktauswahlaccessors abgelegt, so daß der übergeordnete Accessor seinerseits bei der Reaktion auf das Terminal State Event "Auswahl" ein Resourcemapping ausführen kann, um die Selektion zu übernehmen.

Der Benutzer kann den Produktauswahlaccessor durch Triggern eines Input Events "abbrechen" verlassen, ohne eine Produktauswahl zu treffen, oder er kann sich Detailinformationen zum gewählten Produkt anschauen. Im Representer State "zeigeProdukt" wird die gleiche Representerklasse verwendet wie im Representer State "zeigeProduktDetails" des Bestellaccessors. Damit wird eine Wiederverwendung auf Modell- und Implementierungsebene erreicht.

### Modellierungsdetails

Hier werden einige Modellierungsdetails zu zentralen Modellelementen des obigen Anwendungsmodells aufgeführt:

### Zu den Klassen

■ Bestellaccessor:
   öffentliches Attribut "aktuelleBestellung" vom Typ Bestellung.
   öffentliches Attribut "aktuellerKunde" vom Typ Kunde.
      Bem.: Das Attribut wird von einem übergeordneten Accessor, z.B. KundenLoginAccessor, dem Bestellaccessor bei der Initialisierung übergeben.
■ Produktauswahlaccessor:
   öffentliches Attribut "alleProdukte" vom Typ Produkt□ (Menge von Produkten).
   öffentliches Attribut "selektiertesProdukt" vom Typ Produkt.
■ Meldungsrepresenter:
   öffentliches Attribut "Meldung" vom Typ Produkt.
■ Produktselectorrepresenter:
   öffentliches Attribut "alleProdukte" vom Typ Produkt□ (Menge von Produkten).
■ Produktdetailrepresenter
   öffentliches Attribut "aktuellesProdukt" vom Typ Produkt.
■ Bestellrepresenter:
   öffentliches Attribut "dieBestellung" vom Typ Bestellung.
   öffentliches Attribut "derKunde" vom Typ Kunde.

   Element Representer Item "ER_1":
      Label: "Datum"
      Reference Path: this.Bestelldatum
      editierbar: nein
      Input Event: <keine>
   Element Representer Item "ER_2":
      Label: "Kunde Vorname"
      Reference Path: this.aktuellerKunde.Vorname
      editierbar: nein
      Input Event: <keine>
   Element Representer Item "ER_3":
      Label: "Kunde Nachname"
      Reference Path: this.aktuellerKunde.Nachname
      editierbar: nein
      Input Event: <keine>
      *... (weitere)...*
   Element Representer Item "ER_9":
      Label: "Bestellmenge"
      Reference Path:
         this.aktuelleBestellung.ProduktEintraege□.Element.Bestellmenge
      editierbar: ja
      Input Event: "menge"

   Trigger Item "TR_1":
      Label: "Verwerfen"
      Input Event: "verwerfen"

### Zu Elementen des Activitymodells

■ Representer State "zeigeRepresenter" des Bestellaccessors
   zugeordneter Representertyp: Bestellrepresenter
   Resourcemappings:
   Mapping 1:
      Quellelement: Attribut "aktuellerKunde" im aktuellen Bestellaccessor.
      Zielelement: Attribut "derKunde" im neu angelegten Representer Bestellrepresenter.
   Mapping 2:
      Quellelement: Attribut "aktuelleBestellung" im aktuellen Bestellaccessor.
      Zielelement: Attribut "aktuelleBestellung" im neu angelegten Representer Bestellrepresenter.
■ Embedded Accessor State "waehleProdukt" des Bestellaccessors:
   zugeordneter Accessortyp: Produktauswahlaccessor
   zugeordnete(r) Representer: <keine>
   Resourcemappings:
   Mapping 1:
      Quellelement: statische Methode "onlineProdukte" der Klasse "Firma".
      Zielelement: Attribut "alleProdukte" im neu angelegten Produktauswahlaccessor.

### Technologieprojektion für die Benutzerschnittstelle

Aus dem Schnittstellenmodell wird mit Hilfe einer Implementierungscartridge eine Implementierung für eine Benutzerschnittstelle abgeleitet. Die Implementierungscartridge erzeugt eine Web-Application zum Betrieb in einer Servlet-Engine gemäß J2EE-Spezifikation. Als Implementierungsartefakte generiert die Cartridge für jeden Representer eine JSP-Seite (Java Server Page) mit einer Standard-HTML-Darstellung der jeweiligen Representer-Inhalte, also der modellierten Representer Items. Fig. 30 zeigt, wie eine einfache Darstellung des HTML-Representers aussehen kann. Für die beiden Accessorklassen entsteht bei der Codegenerierung je eine Java-Implementierung. Femer wird durch die Cartridge eine Datei "web.xml" gemäß J2EE-Servlet-Spezifikation erstellt, die als Standardkonfigurationsdatei in das zu erstellende Web Application Archive (WAR) eingeht.

Als Teil der Implementierungscartridge wurde neben den Templates für den Codegenerator auch eine Java-Klassenbibliothek ausgeliefert, die auf der Basis der J2EE-Servlet-Schnittstellen eine Implementierung der Adapterschicht für die Laufzeitabstraktionen Accessorcontainer und Representercontainer bereitstellt. Die durch die Cartridge generierten JSPs und Java-Klassen für Representer und Accessoren nutzen Schnittstellen dieser Klassenbibliothek, die deshalb auch als Teil der Web-Application ausgeliefert wird.

### Technologieprojektion für die Systemschnittstelle

Aus dem gleichen Schnittstellenmodell wird nun mit Hilfe einer anderen Implementierungscartridge auch eine Systemschnittstelle abgeleitet.

Die erstellte Systemschnittstelle besteht aus je einem Java-Interface für die Representer im Modell und je einer Implementierungsklasse für diese Representer-Schnittstellen. Für jeden Accessor wird eine eigene Klasse erstellt.

Auch diese Implementierungscartridge enthält eine Klassenbibliothek mit der Adapterschicht-Implementierung, die als Teil der Schnittstelle ausgeliefert werden muß. Sie stellt einfache Implementierungen für die Laufzeitabstraktionen Accessorcontainer und Representercontainer bereit, die von den generierten Accessor- und Representerimplementierungen genutzt werden. Der Benutzer der Schnittstelle kann die Accessorcontainerklasse femer nutzen, um den Bestellaccessor zu starten und ein Implementierungsobjekt für das "Bestellrepresenter" Interface zu erhalten.

Im folgenden sind zum Abschluß der Beschreibung die Java-Schnittstellen für einige der Representer aus dem Anwendungsmodell wiedergegeben.

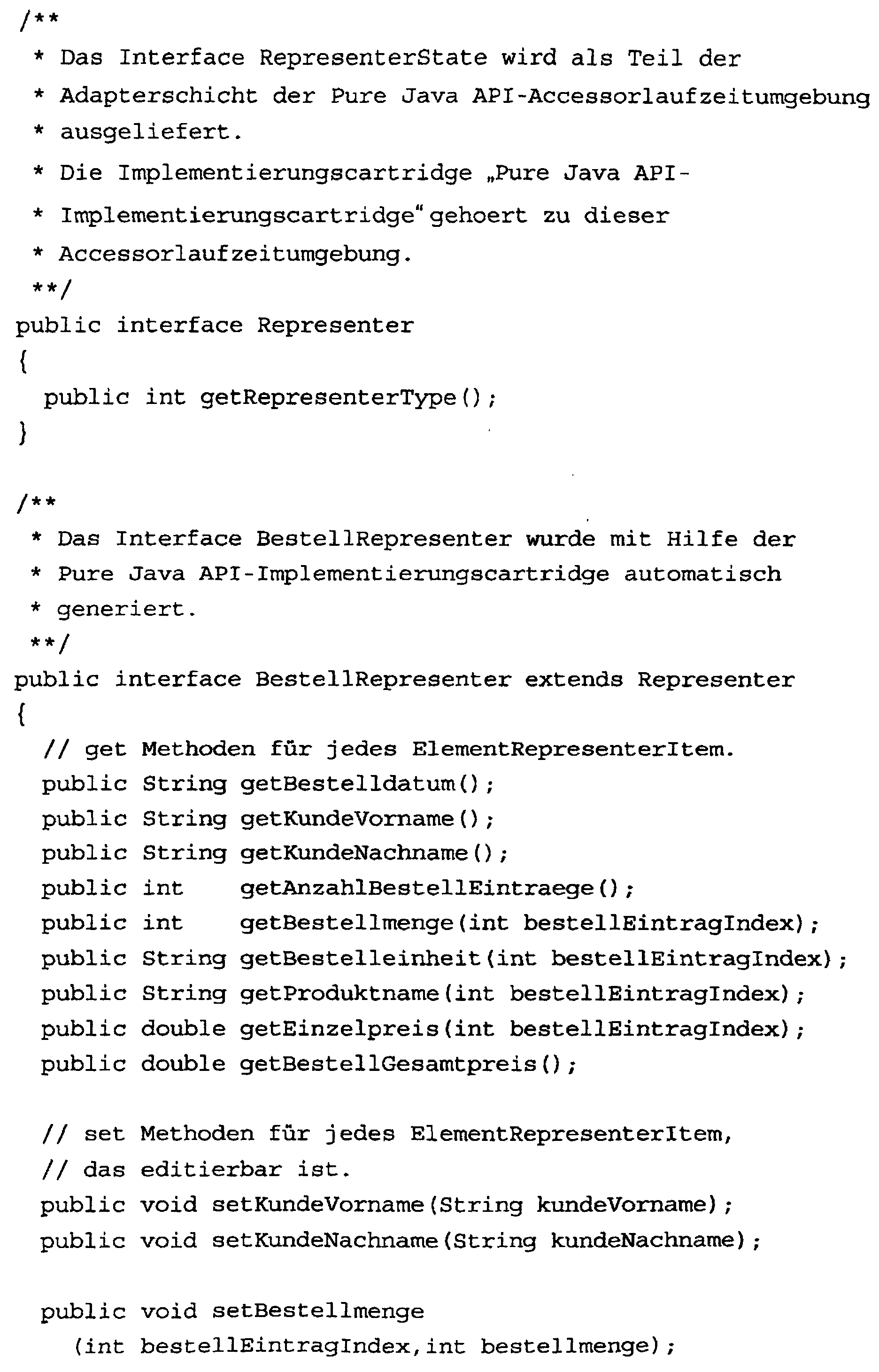

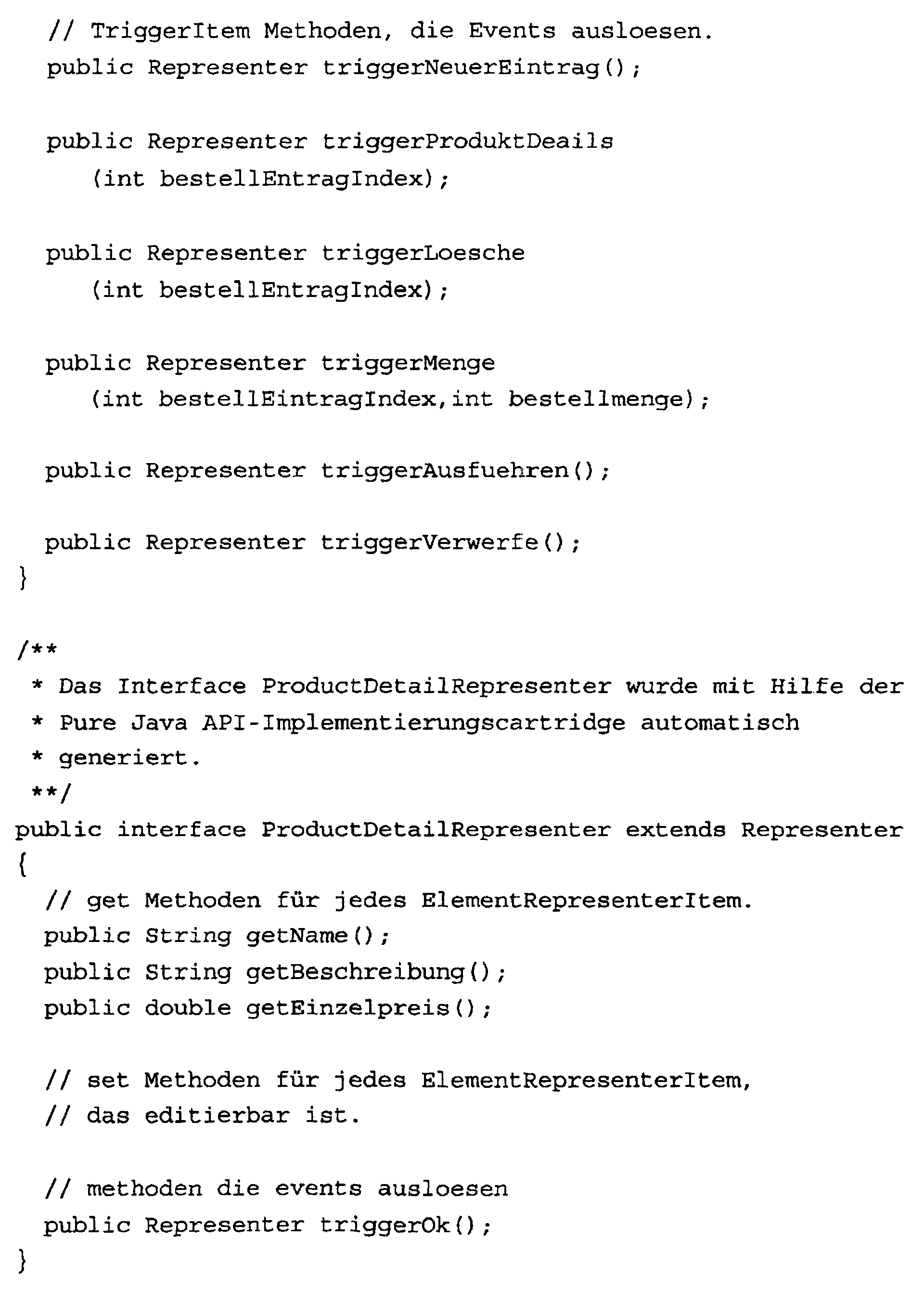

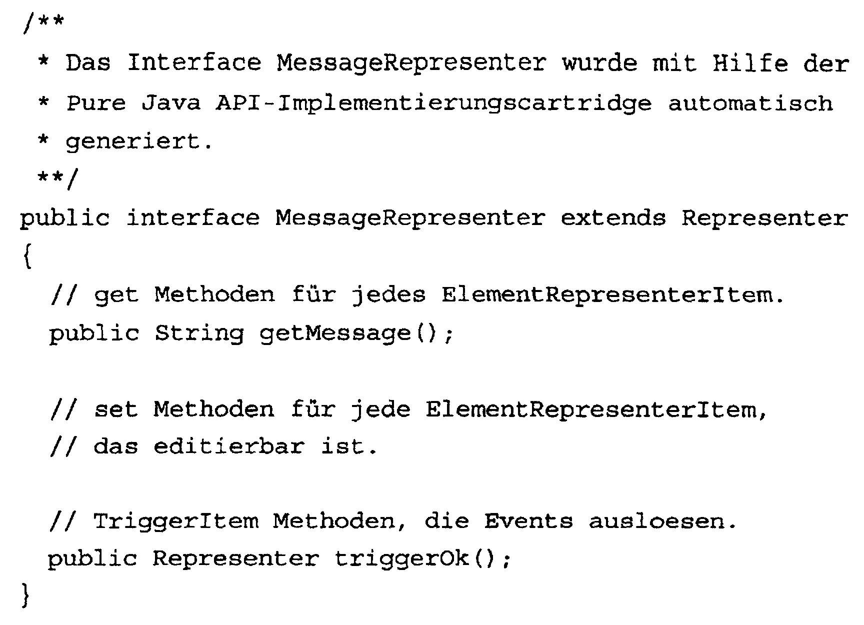

## Patentansprüche

1. Verfahren zur modellbasierten objektorientierten Entwicklung von externen Schnittstellen für verteilte Softwaresysteme, die als Komponenten in einem Datenverarbeitungssystem eigenständig ablauffähig sind, wobei die externen Schnittstellen für den Zugriff durch Clients, entweder menschliche Benutzer oder externe Systeme, eingerichtet werden, und wobei
a) ein definiertes Metamodell als Grundlage eines Anwendungsmodells verwendet wird und das Anwendungsmodell als Abstraktion der jeweiligen externen Schnittstelle jeweils einen Hauptaccessor - optional mit einer Menge untergeordneter Accessoren - enthält,
b) eine Auswahl oder Definition von Accessorlaufzeitumgebungen erfolgt, wobei die Definition unter Verwendung vordefinierter Schlüsselabstraktionen und abstrakter Protokolle erfolgt, so daß die Accessorlaufzeitumgebungen den Betrieb von Accessoren auf unterschiedlichsten Basistechnologien ermöglichen, und
c) eine automatische Generierung aller Implementierungsbestandteile aus dem Anwendungsmodell durch ein Generatorprogramm erfolgt, das auf einer Datenverarbeitungseinrichtung abläuft und Abbildungsvorschriften, die in einer Implementierungscartridge zusammengefaßt sind, auf das Anwendungsmodell anwendet.

2. Verfahren nach Anspruch 1, wobei ein Metamodell verwendet wird, das auf der Basis des Unified Modeling Language UML-Standards erstellt ist.

3. Verfahren nach einem der vorstehenden Ansprüche, wobei ein Metamodell verwendet wird, das die Abstraktion eines Representers vorsieht, der die Modellierung der Inhalte einer View unabhängig von der tatsächlichen Darstellung erlaubt und dabei insbesondere auch die Beschreibung des Bezugs zu beliebigen anderen modellierten Elementen des Anwendungsmodells ermöglicht.

4. Verfahren nach einem der vorstehenden Ansprüche, wobei ein Metamodell verwendet wird, das die Abstraktion eines Accessors bereitstellt, die die Modellierung einer wiederverwendbaren Schnittstelleneinheit erlaubt, einschließlich der Beschreibung des dynamischen Verhaltens, der Einbindung von Representern und untergeordneten Accessoren zur Bereitstellung des Schnittstellenverhaltens, und die dabei insbesondere auch die Beschreibung des Bezugs zu beliebigen anderen modellierten Elementen des Anwendungsmodells ermöglicht.

5. Verfahren nach Anspruch 4, wobei ein Metamodell verwendet wird, das für die Beschreibung des Verhaltens eines Accessors ein Accessorverhaltensmodell auf Grundlage des Unified Modeling Language UML-Activity modells bereitstellt, das die Beschreibung von Kontrollfluß und Datenfluß für einen Accessor ermöglicht, einschließlich der Beschreibung, wie Representer in den Accessor-Ablauf zu integrieren sind, wie ein Accessor andere Accessoren benutzen kann und zu welchen Zeitpunkten im Accessorlauf Zugriffe auf andere modellierte Elemente des Anwendungsmodells erfolgen.

6. Verfahren nach einem der Ansprüche 3, 4 oder 5, wobei ein Metamodell verwendet wird, das für die Beschreibung eines Representers ein Representer-Metamodell bereitstellt, das die Beschreibung der in einem Representer auszugebenden Informationseinheiten und der in einem Representer bereitzustellenden Eingabemöglichkeiten in einer darstellungsunabhängigen Form und mit Beschreibung des Bezugs auf weitere Unified Modeling Language UML-Modellelemente ermöglicht.

7. Verfahren nach einem der Ansprüche 5 oder 6, wobei ein Metamodell verwendet wird, das die Abstraktion des Resourcemappings bereitstellt, die die Beschreibung von im Accessorlauf durchzuführenden Wertübertragungen zwischen zwei Modellelementen und die Beschreibung von Wertwandlungen, die während der jeweiligen Wertübertragungen ausgeführt werden, ermöglicht.

8. Verfahren nach Anspruch 7, wobei ein Metamodell verwendet wird, das die Abstraktion des Referenzpfades bereitstellt, die die Beschreibung des innerhalb eines Resourcemappings zu verwendenden Quellelements und die Beschreibung des innerhalb eines Resourcemappings zu verwendenden Zielelements ermöglicht.

9. Verfahren nach Anspruch 6, wobei ein Metamodell verwendet wird, das die Abstraktion des Referenzpfades bereitstellt, die die Beschreibung der Referenz auf ein UML-Element in einem Anwendungsmodell im Rahmen der Modellierung eines Representers ermöglicht, wobei das referenzierte UML-Element einen zur Laufzeit des Softwaresystems veränderlichen Wert repräsentiert.

10. Verfahren nach einem der Ansprüche 5 bis 9, wobei ein Metamodell verwendet wird, das die Beschreibung einer differenzierten Behandlung von Fehlersituationen im Accessorlauf als Teil des Accessorverhaltensmodells ermöglicht.

11. Verfahren nach einem der vorstehenden Ansprüche, wobei die Definition einer Accessorlaufzeitumgebung erfolgt, indem zunächst Basistechnologien ausgewählt werden; auf der Grundlage dieser Basistechnologien die Abstraktionen Accessorcontainer, Representercontainer und ihre vordefinierten Protokolle umgesetzt und bereitgestellt werden; und schließlich eine auf die Laufzeitumgebung zugeschnittene Implementierungscartridge definiert und bereitgestellt wird.

12. Verfahren nach einem der vorstehenden Ansprüche, wobei die Erstellung eines Anwendungsmodells durch ein Generatorprogramm automatisch erfolgt, das auf einer Datenverarbeitungseinrichtung abläuft und Abbildungsvorschriften, die in einer Modellierungscartridge zusammengefaßt sind, auf ein Modell anwendet.

13. Verfahren nach Anspruch 12, wobei zur Definition und Bereitstellung der Modellierungscartridge zunächst Regeln zur Erstellung von Schnittstellen für Fachmodelle aufgestellt werden, die dann in der Modellierungscartridge implementiert werden.

## Claims

1. Process for the model-based, object-oriented development of external interfaces for distributed software systems which can independently run in a data processing system. The external interfaces are set up for access through clients, either human users or external systems. The following specifications apply:
a) A defined metamodel is used as the basis of the application model and the application model as an abstraction of the respective external interface contains one main accessor plus, optionally, a set of sub-accessors.
b) A selection or definition of accessor runtime environments is made, with the definition being performed via predefined key abstractions and abstract protocols, so that the accessor runtime environments enable the operation of accessors in diverse base technology environments.
c) A generator program automatically generates all implementation components from the application model. This generator program runs on a computer and applies mapping rules contained in an implementation cartridge to the application model.

2. Process according to claim 1 which is **characterized by** the fact that it uses a metamodel which is created on the basis of the UML standard (Unified Modeling Language).

3. Process according to one of the above claims which is **characterized by** the fact that a metamodel is used which enables the abstraction of a representer which, in turn, allows for the modeling of the contents of a view independent of the actual representation and, in particular, for the description of references to any of the other modeled elements of the application model.

4. Process according to one of the above claims which is **characterized by** the fact that a metamodel is used which provides the abstraction of an accessor. This abstraction allows for the modeling of a re-usable interface unit, including the description of the dynamic behavior, for the inclusion of representers and sub-accessors for the provision of the interface behavior and, in particular, for the description of references to any of the other modeled elements of the application model.

5. Process according to claim 4 which is **characterized by** the fact that a metamodel is used which provides an accessor behavior model on the basis of the UML Activity model (Unified Modeling Language) for the description of the behavior of an accessor, which enables the description of the control flow and the data flow of an accessor, including a description of the way representers are to be integrated into the accessor run, of the ways an accessor can use other accessors and of the points in time at which other modeled elements of the application model can be accessed during the run of the accessor.

6. Process according to one of the above claims 3, 4 or 5 which is **characterized by** the fact that a metamodel is used which provides a representer metamodel for the description of a representer which enables the description of the units of information to be output by the representer as well as the input elements to be provided by a representer. This description is performed in a way independent of the representation and allows for descriptions of references to additional UML model elements.

7. Process according to one of the above claims 5 or 6 which is **characterized by** the fact that a metamodel is used which provides the abstraction "Resource Mapping" which in turn enables the description of the value assignments between two model elements during the accessor runs as well as the description of the value transformations performed during the respective value assignments.

8. Process according to claim 7 which is **characterized by** the fact that it uses a metamodel which provides the abstraction "Reference Path". This abstraction enables the description of the source element to be used within the framework of a resource mapping as well as the description of the target element to be used within the framework of a resource mapping.

9. Process according to claim 6 which is **characterized by** the fact that it uses a metamodel which provides the abstraction "Reference Path". This abstraction enables the description of the reference of a UML element in an application model within the framework of the modeling of a representer, with the referenced UML element representing a variable value during the runtime of the software system.

10. Process according to one of the above claims 5 to 9 which is **characterized by** the fact that it uses a metamodel which enables the description, as a part of the accessor behavior model, of differentiated error handling in error situations during the run of the accessor.

11. Process according to one of the above claims which is **characterized by** the fact that an accessor runtime environment is defined in the following sequence of steps: first, the base technologies are selected; on the basis of these base technologies, the abstraction "Accessor Container" and "Representer Container" and their defined protocols are implemented and provided; and finally, an implementation cartridge adapted to the runtime environment is defined and provided.

12. Process according to one of the above claims which is **characterized by** the fact that the creation of an application model is performed automatically by a generator program which runs on a computer and applies mapping rules comprised in a modeling cartridge to a model.

13. Process according to claim 12 which is **characterized by** the fact that for the definition and provision of a modeling cartridge, rules for the creation of interfaces for business models are created first. These are then implemented in the modeling cartridge.

## Revendications

1. Procédure de développement basé modèle et orienté objet d'interfaces externes pour des systèmes de logiciels distribués. Ces interfaces, étant des composantes, s'exécutent de manière autonome dans un système de traitement de données. Ces interfaces externes sont prévues pour permettre l'accès par des clients, soit utilisateurs humains, soit systèmes externes. Les conditions suivantes devant être remplies :
a. Un métamodèle défini est utilisé comme base d'un modèle d'application qui, étant une abstraction de l'interface externe respective, contient un Accessor principal et, en option, un ensemble d'Accessors subordonnés.
b. Un choix ou définition des environnements d'exécution des Accessors a lieu et dans ce cas la définition a lieu au moyen d'abstractions-clés prédéfinies et de protocoles abstraits de sorte que les environnements d'exécution des Accessors permettent le fonctionnement des Accessors avec différentes technologies de base.
c. Une génération automatique de toutes les parties de l'implémentation à partir du modèle d'application est effectuée par un programme générateur qui s'exécute sur une plate-forme de traitement de données. Le programme générateur applique au modèle d'application des règles de transformation définies dans une cartouche d'implémentation.

2. Procédure conforme à la revendication 1, **caractérisée par le fait que** l'on utilise un métamodèle construit conformément au standard UML (Unified Modeling Language).

3. Procédure conforme à l'une des revendications précédentes, **caractérisée par le fait que** l'on utilise un métamodèle prévoyant l'abstraction d'un Representer. L'abstraction du Representer permet la modélisation des contenus d'un View indépendamment de la représentation effective et permet en particulier aussi la description du rapport avec d'autres éléments quelconques modélisés du modèle de l'application.

4. Procédure conforme à l'une des revendications précédentes, **caractérisée par le fait que** l'on utilise un métamodèle qui met à disposition l'abstraction d'un Accessor. Cette abstraction permet la modélisation d'une unité d'interface réutilisable y compris la description du comportement dynamique, l'intégration des Representers et les Accessors subordonnés pour mettre à disposition le comportement d'interface et qui permet en particulier la description du rapport avec d'autres éléments quelconques modélisés du modèle de l'application.

5. Procédure conforme à la revendication 4, **caractérisée par le fait que** l'on utilise un métamodèle mettant à disposition un modèle de comportement des Accessors basé sur le modèle d'activité UML (Unified Modeling Language) pour décrire le comportement d'un Accessor. Ce modèle d'activité permet la description du flux de contrôle et de données pour un Accessor y compris la description de l'intégration des Representers au déroulement des Accessors, la description de la manière selon laquelle un Accessor peut utiliser les autres Accessors et la description du moment dans le déroulement d'Accessor l'accès aux éléments modélisés du modèle d'application aura lieu.

6. Procédure conforme à l'une des revendications 3, 4 ou 5, **caractérisée par le fait que** l'on utilise un métamodèle qui met à disposition un métamodèle du Représenter pour la description d'un Representer. Le métamodèle du Representer permet la description des unités d'informations fournies par un Representer ainsi que des possibilités de saisie à fournir par le Representer sous une forme indépendante de la représentation et avec description du rapport avec d'autres éléments du modèle UML.

7. Procédure conforme à l'une des revendications 5 ou 6, **caractérisée par le fait que** l'on utilise un métamodèle qui met à disposition l'abstraction de la transformation des ressources. Cette abstraction permet la description des transmissions des valeurs à effectuer entre deux éléments du modèle au cours du déroulement d'Accessor ainsi que la description des transformations des valeurs qui sont exécutées au cours des transmissions des données respectives.

8. Procédure conforme à la revendication 7, **caractérisée par le fait que** l'on utilise un métamodéle qui met à disposition l'abstraction du chemin de référence qui permet la description des éléments sources à utiliser au sein de la transformation des ressources et la description de l'élément cible a utiliser au sein de la transformation des ressources.

9. Procédure conforme à la revendication 6, **caractérisée par le fait que** l'on utilise un métamodèle qui met à disposition l'abstraction du chemin de référence qui permet, au cours de la modélisation d'un Representer, la description de la référence à un élément UML dans un modèle d'application auquel cas l'élément UML référencé représente une valeur variable au cours du temps d'exécution du logiciel.

10. Procédure conforme à l'une des revendications 5 à 9, **caractérisée par le fait que** l'on utilise un métamodèle qui permet la description du traitement différencié des situations d'erreurs au cours du déroulement d'Accessor, cette description faisant partie du modèle de comportement d'Accessor.

11. Procédure conforme à l'une des revendications précédentes, **caractérisée par le fait que** la définition d'un environnement d'exécution des Accessors a lieu selon les étapes suivantes : tout d'abord, choix des technologies de base ; ensuite implémentation et mise à disposition sur la base de ces technologies de base des abstractions Accessor Container, Representer Container et leurs protocoles prédéfinis ; enfin, définition et mise à disposition d'une cartouche d'implémentation conçue en fonction de l'environnement d'exécution.

12. Procédure conforme à l'une des revendications précédentes, **caractérisée par le fait qu'**un modèle d'application est généré automatiquement par un programme générateur qui s'exécute sur un plate-forme de traitement de données. Le programme générateur applique à un modèle des règles de transformation définies dans une cartouche de modélisation.

13. Procédure conforme à la revendication 12, **caractérisée par le fait que** pour la définition et la mise à disposition des cartouches de modélisation, des règles concernant l'établissement des interfaces pour les modèles sont définies. Celles-ci sont alors implémentées dans les cartouches de modélisation.
